(19) **Europäisches Patentamt / European Patent Office / Office européen des brevets**

(11) **EP 3 661 145 B1**

(12) **EUROPEAN PATENT SPECIFICATION**

(45) Date of publication and mention
of the grant of the patent:
**27.08.2025 Bulletin 2025/35**

(21) Application number: **19826530.8**

(22) Date of filing: **26.06.2019**

(51) International Patent Classification (IPC):
*H04L 5/00* (2006.01)   *H04L 27/26* (2006.01)
*H04B 7/024* (2017.01)   *H04L 27/00* (2006.01)
*H04W 56/00* (2009.01)   *H04B 7/0413* (2017.01)

(52) Cooperative Patent Classification (CPC):
**H04L 5/0048; H04B 7/024; H04L 5/0091;**
**H04L 27/0014; H04L 27/2657; H04W 56/0035**

(86) International application number:
**PCT/CN2019/093003**

(87) International publication number:
**WO 2020/001476 (02.01.2020 Gazette 2020/01)**

(54) **SYNCHRONOUS CARRIER FREQUENCY SIGNAL SENDING METHOD AND APPARATUS, AND SYNCHRONOUS CARRIER FREQUENCY SIGNAL RECEIVING METHOD AND APPARATUS**

VERFAHREN UND VORRICHTUNG ZUM SYNCHRONEN SENDEN VON TRÄGERFREQUENZSIGNALEN SOWIE VERFAHREN UND VORRICHTUNG ZUM SYNCHRONEN EMPFANGEN VON TRÄGERFREQUENZSIGNALEN

PROCÉDÉ ET APPAREIL D'ENVOI DE SIGNAL DE FRÉQUENCE PORTEUSE SYNCHRONE ET PROCÉDÉ ET APPAREIL DE RÉCEPTION DE SIGNAL DE FRÉQUENCE PORTEUSE SYNCHRONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2018 CN 201810686589**

(43) Date of publication of application:
**03.06.2020 Bulletin 2020/23**

(73) Proprietor: **Huawei Technologies Co., Ltd.**
**Shenzhen, Guangdong 518129 (CN)**

(72) Inventors:
• **CHEN, Guohai**
**Shenzhen, Guangdong 518129 (CN)**
• **LV, Yunping**
**Shenzhen, Guangdong 518129 (CN)**
• **YANG, Bo**
**Shenzhen, Guangdong 518129 (CN)**

• **CHEN, Peng**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 101 145 827     CN-A- 102 474 838
US-A1- 2005 136 835     US-A1- 2013 315 211
US-A1- 2014 211 779     US-A1- 2014 369 243

• **HORIA VLAD BALAN ET AL: "AirSync", IEEE /ACM TRANSACTIONS ON NETWORKING, IEEE / ACM, NEW YORK, NY, US, vol. 21, no. 6, 1 December 2013 (2013-12-01), pages 1681 - 1695, XP058045579, ISSN: 1063-6692, DOI: 10.1109/ TNET.2012.2230449**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This application relates to the field of communications technologies, and in particular, to a synchronous carrier frequency signal sending method, receiving method, and apparatus.

**BACKGROUND**

A multiple-input multiple-output (multiple-input multiple-output, MIMO) technology is a technology that enables wireless signals to be transmitted on a plurality of antennas of transmitters and receivers by increasing a quantity of antennas of wireless transceivers, to multiply a rate of a wireless communications system.

To further improve MIMO performance, MIMO network (or referred to as distributed MIMO) is proposed. In the MIMO network, a plurality of independent access points (access point, AP) cooperate with each other, and antennas on all APs are considered as antennas on a large AP. Because physical locations of the plurality of independent APs are scattered, correlation between antennas on the plurality of APs is relatively small. In this case, a throughput of a network can be increased by increasing a quantity of APs.

However, when an AP of the MIMO network is actually deployed, a carrier frequency difference exists between APs because of a difference between crystal oscillators that provide reference clocks. Specifically, because reference clocks provided by crystal oscillators in APs may not be completely the same, a phase is rotated, and for a transmitted signal, a phase error is constantly accumulated, so that a relative phase of a signal obtained at a receive end is also constantly rotated. In this case, a bit error rate (bit error rate, BER) increases, and the receive end cannot decode the signal. Because the phase changes with time, a larger carrier frequency difference between APs indicates a faster phase difference change and a higher bit error rate.

Therefore, for a person skilled in the art, a technical solution is required to support distributed APs in the MIMO network in implementing carrier frequency synchronization, to increase a throughput of the MIMO network.. US 2014/369243, US2014/21779, US2013/315211 and "Horia Vlad Balan et al: Air Sync IEEE/ACM Transactions on Networking, vol 21, No 6, 1 Dec 2013, pages 1681-1695, all disclose synchronous carrier frequency signal sending method, receiving method, and apparatus, to implement frequency synchronization between access points in a distributed network.

**SUMMARY**

This application provides a synchronous carrier frequency signal sending method, receiving method, and apparatus, to implement frequency synchronization between access points in a distributed network, thereby increasing a throughput of a network.

The invention has been defined in the independent claims. Further specific technical features have been defined in the dependent claims.

According to a first aspect, this application provides a synchronous carrier frequency signal sending method. The method may be applied to distributed multiple-input multiple-output MIMO, and the method includes:
obtaining, by a first access point, synchronous carrier frequency information, wherein the synchronous carrier frequency information is used to set a synchronous carrier frequency channel for at least one second access point; sending, by the first access point, the synchronous carrier frequency information to the at least one second access point; generating, by the first access point, two or more synchronous carrier frequency signals, wherein a frequency difference between the two or more synchronous carrier frequency signals is a fixed value and wherein the two or more synchronous carrier frequency signals are used to enable the at least one second access point to set the fixed value of the frequency difference between the two or more synchronous carrier frequency signals as at least one working radio frequency reference clock of the at least one second access point; and sending, by the first access point, the two or more synchronous carrier frequency signals on the synchronous carrier frequency channel, wherein the generating, by the first access point, two or more synchronous carrier frequency signals comprises: obtaining, by the first access point, a frequency of a local crystal oscillator; inputting the frequency of the local crystal oscillator to at least two phase-locked loops, PLLs, and obtaining a frequency of one synchronous carrier frequency signal after the frequency of the local crystal oscillator is processed by using each PLL; combining frequencies of all synchronous carrier frequency signals into one channel of signals by using a combiner and outputting the channel of signals; inputting, to a frequency mixer for processing, the channel of signals output from the combiner, wherein the frequency mixer is configured to mix the channel of signals input to the frequency mixer with a local-frequency signal for outputting; and performing power amplification on signals output after being processed by using the frequency mixer, to obtain the two or more synchronous carrier frequency signals.

According to the method provided in this aspect, a first access point delivers synchronous carrier frequency information to an access point in a distributed network, to notify an AP at a receive end in a network of a synchronous carrier frequency channel of synchronous carrier frequency signals that are to be sent by the first access point. Then, the first access point sends two or more synchronous carrier frequency signals with a fixed frequency difference on the synchronous carrier frequency channel, to ensure that the AP at the receive end obtains reference clocks with a same frequency after receiving and processing the two or more synchronous carrier frequency signals with the fixed frequency difference. In addition, the reference clock is used as a reference clock of a working channel. In this way, reference clocks of working channels of APs at the receive end are the same, and a frequency difference that is between different APs and that is caused by different reference clocks provided by crystal oscillators is further eliminated. In this method, a throughput of a network is increased.

With reference to the first aspect, in an implementation of the first aspect, the synchronous carrier frequency information includes synchronous carrier frequency radio frequency information and synchronous carrier frequency signal information, where the synchronous carrier frequency radio frequency information includes a center frequency of a carrier frequency or a channel number corresponding to a carrier frequency; and the synchronous carrier frequency signal information includes a frequency of each synchronous carrier frequency signal, a quantity of synchronous carrier frequency signals and a frequency difference between the synchronous carrier frequency signals, or a subcarrier number corresponding to a frequency of each synchronous carrier frequency signal.

The synchronous carrier frequency radio frequency information serving as an RFPLL parameter of the synchronous carrier frequency channel is used on the synchronous carrier frequency channel. The synchronous carrier frequency signal information serving as a Fref parameter is used on a working channel.

With reference to the first aspect, in another implementation of the first aspect, the sending, by the first access point, the synchronous carrier frequency information to the at least one second access point includes: sending, by an application layer of the first access point, a synchronous carrier frequency information indication to the at least one second access point by using a UDP or a TCP, where the synchronous carrier frequency information indication includes the synchronous carrier frequency information; or sending, by a MAC layer of the first access point, a first frame to the at least one second access point, where the first frame carries the synchronous carrier frequency information.

The first frame may be one of 802.11 frames. Optionally, the first frame may be an action frame of the 802.11 frames.

With reference to the first aspect, in still another implementation of the first aspect, the generating, by the first access point, two or more synchronous carrier frequency signals includes: generating, by the first access point, the two or more synchronous carrier frequency signals in an analog domain manner. Specifically, a process includes:

obtaining, by the first access point, a frequency of a local crystal oscillator; inputting the frequency of the local crystal oscillator to at least two phase-locked loops (PLLs); obtaining a frequency of one synchronous carrier frequency signal after the frequency of the local crystal oscillator is processed by using each PLL; combining frequencies of all synchronous carrier frequency signals into one channel of signals by using a combiner and outputting the channel of signals; inputting, to a frequency mixer for processing, the channel of signals output from the combiner; performing power amplification on signals output after being processed by using the frequency mixer, to obtain the two or more synchronous carrier frequency signals. The combiner is configured to combine a plurality channels of signals into one channel of signals, and the frequency mixer is configured to mix the channel of signals input to the frequency mixer with a local-frequency signal for outputting.

According to the method provided in this implementation, the first access point generates the two or more synchronous carrier frequency signals in the analog domain manner. In this manner, a calculation amount is small, and only a relatively small processing resource is occupied. Therefore, a synchronous carrier frequency signal can be generated conveniently and quickly.

With reference to the first aspect, in still another implementation of the first aspect, the generating, by the first access point, two or more synchronous carrier frequency signals includes: generating, by the first access point, the two or more synchronous carrier frequency signals in a digital domain manner. Specifically, a process includes:

selecting, by the first access point, two or more subcarriers from all subcarriers; setting amplitude values of the two or more subcarriers to a preset value, and setting amplitude values of remaining subcarriers other than the selected two or more subcarriers to zero; performing inverse discrete Fourier transform (IDFT) on all the subcarriers to generate a time domain signal, where the time domain signal includes two or more frequency components; performing digital-to-analog conversion on the time domain signal by using a digital-to-analog converter and outputting a converted time domain signal; processing, by using a frequency mixer, the converted signal output from the digital-to-analog converter, where the frequency mixer is configured to mix the converted signal input to the frequency mixer with a local-frequency signal for outputting; and performing power amplification on signals output after being processed by using the frequency mixer, to obtain the two or more synchronous carrier frequency signals.

In this implementation, the first access point generates the synchronous carrier frequency signals in the digital domain manner. In this process, different subcarriers may be selected to determine a frequency difference between different carrier frequency signals. Selection manners are flexible and diversified, and interference from an external environment may be further avoided in actual running.

With reference to the first aspect, in still another implementation of the first aspect, the sending, by the first access point, the synchronous carrier frequency information to the at least one second access point includes: sending, by the first access point, the synchronous carrier frequency information to the at least one second access point by using the synchronous carrier frequency channel or the working channel.

According to a second aspect, this application further provides a synchronous carrier frequency signal sending apparatus, where the apparatus includes:

an obtaining unit, configured to obtain synchronous carrier frequency information, wherein the synchronous carrier frequency information is used to set a synchronous carrier frequency channel for at least one second access point; a sending unit, configured to send the synchronous carrier frequency information to the at least one second access point; and a generation unit, configured to generate two or more synchronous carrier frequency signals, wherein a frequency difference between the two or more synchronous carrier frequency signals is a fixed value and wherein the two or more synchronous carrier frequency signals are used to enable the at least one second access point to set the fixed value of the frequency difference between the two or more synchronous carrier frequency signals as at least one working radio frequency reference clock of the at least one second access point; wherein the sending unit is further configured to send the two or more synchronous carrier frequency signals on the synchronous carrier frequency channel, wherein the generation unit is specifically configured to: obtain a frequency of a local crystal oscillator; input the frequency of the local crystal oscillator to at least two phase-locked loops, PLLs; obtain a frequency of one synchronous carrier frequency signal after the frequency of the local crystal oscillator is processed by using each PLL; combine frequencies of all synchronous carrier frequency signals into a channel of signals by using a combiner, and output the channel of signals; input, to a frequency mixer for processing, the channel of signals output from the combiner, wherein the frequency mixer is configured to mix the channel of signals input to the frequency mixer with a local-frequency signal for outputting; and perform power amplification on signals output after being processed by using the frequency mixer, to obtain the two or more synchronous carrier frequency signals.

With reference to the second aspect, in an implementation of the second aspect, the synchronous carrier frequency information includes synchronous carrier frequency radio frequency information and synchronous carrier frequency signal information, where the synchronous carrier frequency radio frequency information includes a center frequency of a carrier frequency or a channel number corresponding to a carrier frequency; and the synchronous carrier frequency signal information includes a frequency of each synchronous carrier frequency signal, a quantity of synchronous carrier frequency signals and a frequency difference between the synchronous carrier frequency signals, or a subcarrier number corresponding to a frequency of each synchronous carrier frequency signal.

With reference to the second aspect, in another implementation of the second aspect, the sending unit is specifically configured to: send a synchronous carrier frequency information indication to the at least one second access point by using a UDP or a TCP, where the synchronous carrier frequency information indication includes the synchronous carrier frequency information; or send a first frame to the at least one second access point by using a MAC layer, where the first frame carries the synchronous carrier frequency information.

With reference to the second aspect, in still another implementation of the second aspect, the generation unit is specifically configured to: obtain a frequency of a local crystal oscillator; input the frequency of the local crystal oscillator to at least two phase-locked loops (PLLs); obtain a frequency of one synchronous carrier frequency signal after the frequency of the local crystal oscillator is processed by using each PLL; combine frequencies of all synchronous carrier frequency signals into one channel of signals by using a combiner, and output the channel of signals; input, to a frequency mixer for processing, the channel of signals output from the combiner, where the frequency mixer is configured to mix the channel of signals input to the frequency mixer with a local-frequency signal for outputting; and perform power amplification on signals output after being processed by using the frequency mixer, to obtain the two or more synchronous carrier frequency signals.

With reference to the second aspect, in still another implementation of the second aspect, the generation unit is specifically configured to: select two or more subcarriers from all subcarriers, set amplitude values of the two or more subcarriers to a preset value, and set amplitude values of remaining subcarriers other than the selected two or more subcarriers to zero; perform inverse discrete Fourier transform (IDFT) on all the subcarriers to generate a time domain signal, where the time domain signal includes two or more frequency components; perform digital-to-analog conversion on the time domain signal by using a digital-to-analog converter, and output a converted time domain signal; process, by using a frequency mixer, the converted signal output from the digital-to-analog converter, where the frequency mixer is configured to mix the converted signal input to the frequency mixer with a local-frequency signal for outputting; and perform power amplification on signals output after being processed by using the frequency mixer, to obtain the two or more synchronous carrier frequency signals.

With reference to the second aspect, in still another implementation of the second aspect, the sending unit is specifically configured to send the synchronous carrier frequency information to the at least one second access point by using the synchronous carrier frequency channel or a working channel.

According to a third aspect, this application further provides a synchronous carrier frequency signal receiving apparatus, where the apparatus includes:

a receiving unit, configured to receive synchronous carrier frequency information from a first access point; and a determining unit, configured to determine a synchronous carrier frequency channel based on the synchronous carrier frequency information; wherein the receiving unit is further configured to receive two or more synchronous carrier frequency signals from the first access point on the synchronous carrier frequency channel, wherein a frequency difference between the two or more synchronous carrier frequency signals is a fixed value and wherein the two or more synchronous carrier frequency signals are used to enable at least one second access point to set the fixed value of the frequency difference between the two or more synchronous carrier frequency signals as at least one working radio frequency reference clock of the at least one second access point, the apparatus further comprising a sending unit, wherein the determining unit is further configured to: process the two or more synchronous carrier frequency signals to obtain a first clock signal; configure, based on a frequency of the first clock signal, a parameter used for a working radio frequency phase-locked loop RFPLL, to obtain a first carrier frequency; and the sending unit is configured to send data at the first carrier frequency, wherein the determining unit is specifically configured to: amplify the two or more synchronous carrier frequency signals by using a low noise amplifier; process amplified signals by using a frequency mixer, wherein the frequency mixer is configured to mix amplified signals input to the frequency mixer with a local frequency signal for outputting; output two channels of same signals based on the signals processed by using the frequency mixer; process, by using a multiplier, the two channels of same signals to obtain a first mixed signal; and perform band-pass filtering processing on the first mixed signal to obtain the first clock signal.

With reference to the third aspect, in an implementation of the third aspect, the synchronous carrier frequency information includes synchronous carrier frequency radio frequency information, and the synchronous carrier frequency radio frequency information includes a center frequency of a carrier frequency or a channel number corresponding to a carrier frequency; and the determining unit is specifically configured to determine the synchronous carrier frequency channel based on the center frequency of the carrier frequency or the channel number.

With reference to the third aspect, in another implementation of the third aspect, the synchronous carrier frequency information includes synchronous carrier frequency signal information, and the synchronous carrier frequency signal information includes a frequency of each synchronous carrier frequency signal, a quantity of synchronous carrier frequency signals and a frequency difference between the synchronous carrier frequency signals, or a subcarrier number corresponding to a frequency of each synchronous carrier frequency signal.

The determining unit is further configured to: before the two or more synchronous carrier frequency signals are received, determine a frequency difference between synchronous carrier frequency signals based on the frequency of each synchronous carrier frequency signal, the quantity of synchronous carrier frequency signals and the frequency difference between the synchronous carrier frequency signals, or the subcarrier number; and set, based on the frequency difference, a radio parameter of a working channel of the second access point, and set, as a working radio frequency reference clock, a signal processed by using a synchronous carrier frequency signal.

With reference to the third aspect, in still another implementation of the third aspect, the receiving unit is specifically configured to receive, by using an application layer, a synchronous carrier frequency information indication from the first access point, where the synchronous carrier frequency information indication includes the synchronous carrier frequency information; or receive a first frame from the first access point, where the first frame carries the synchronous carrier frequency information.

With reference to the third aspect, in still another implementation of the third aspect, the determining unit is further configured to: process the two or more synchronous carrier frequency signals to obtain a first clock signal; configure, based on a frequency of the first clock signal, a parameter used for a working radio RFPLL, to obtain a first carrier frequency; and the sending unit is configured to send data based on the first carrier frequency. For example, a sending unit and another access point in distributed MIMO jointly send the data at the first carrier frequency, where a frequency of a clock signal used when the another access point in the distributed MIMO sends the data is the same as the frequency of the first clock signal.

With reference to the third aspect, in still another implementation of the third aspect, the determining unit is specifically configured to: amplify the two or more synchronous carrier frequency signals by using a low noise amplifier; process the amplified signals by using a frequency mixer, where the frequency mixer is configured to mix the amplified signals input to the frequency mixer with a local-frequency signal for outputting; output two channels of same signals based on the signals processed by using the frequency mixer, and process, by using a multiplier, the two channels of same signals to obtain a first mixed signal; and perform band-pass filtering processing on the first mixed signal to obtain the first clock signal.

With reference to the third aspect, in still another implementation of the third aspect, the determining unit is specifically configured to: amplify the two or more synchronous carrier frequency signals by using a low noise amplifier, and then process the amplified signals by using a frequency mixer, where the frequency mixer is configured to mix the amplified signals input to the frequency mixer with a local-frequency signal for outputting; perform analog-to-digital conversion on signals processed by using the frequency mixer, and adding or subtracting frequencies of converted signals in a digital domain to obtain a second mixed signal; and perform band-pass filtering processing on the second mixed signal to obtain the first clock signal.

According to the method provided in this application, at a transmit end, a first access point sends synchronous carrier frequency information to at least one second access point, to indicate a synchronous carrier frequency channel on which a synchronous carrier frequency signal to be sent by each second access point is located, and then sends two or more synchronous carrier frequency signals on the indicated synchronous carrier frequency channel. At a receive end, each second access point first determines the synchronous carrier frequency channel based on the synchronous carrier frequency information, and then receives the two or more synchronous carrier frequency signals on the synchronous carrier frequency channel, and processes these synchronous carrier frequency signals. Because a frequency difference between these synchronous carrier frequency signals is fixed, reference clocks with a same frequency are obtained after the synchronous carrier frequency signals are processed, and the reference clock is used as a reference clock of a working channel, thereby eliminating a frequency difference that is between different access points and that is caused by different reference clocks provided by crystal oscillators. In this method, frequency synchronization between different access points is implemented, and a throughput of a network is increased.

## BRIEF DESCRIPTION OF DRAWINGS

FIG. 1a is a schematic diagram of an application scenario 1 according to an implementation of this application;
FIG. 1b is a schematic diagram of an application scenario 2 according to an implementation of this application;
FIG. 1c is a schematic diagram of an application scenario 3 according to an implementation of this application;
FIG. 1d is a schematic diagram of an application scenario 4 according to an implementation of this application;
FIG. 2a is a schematic diagram of a principle of distributed MIMO in which there is no frequency difference between access points according to an implementation of this application;
FIG. 2b is a schematic diagram of a principle of distributed MIMO in which there is a frequency difference between access points according to an implementation of this application;
FIG. 3A and FIG. 3B are a signaling flowchart of a synchronous carrier frequency signal sending method according to an implementation of this application;
FIG. 4a-1 and FIG. 4a-2 are a schematic diagram of signal analytic derivation according to an implementation of this application;

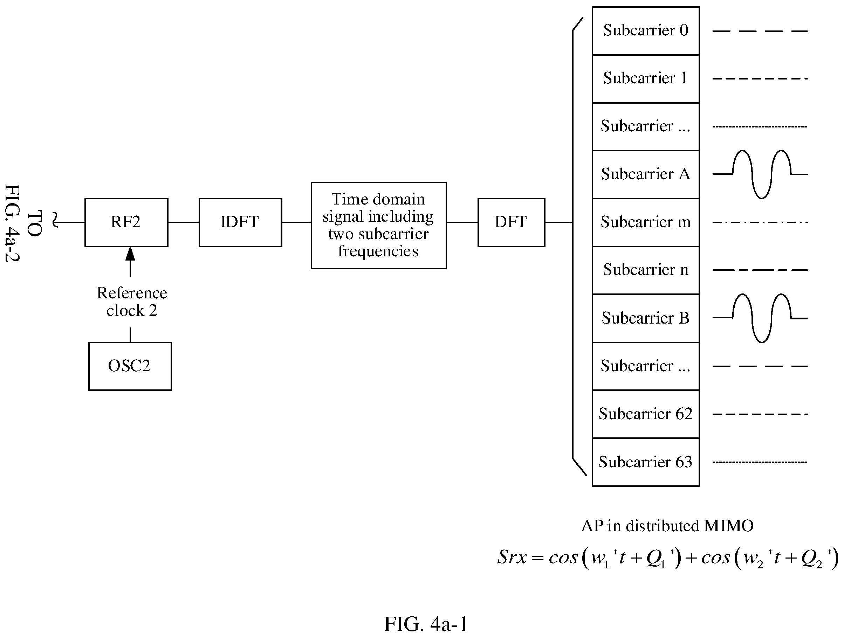

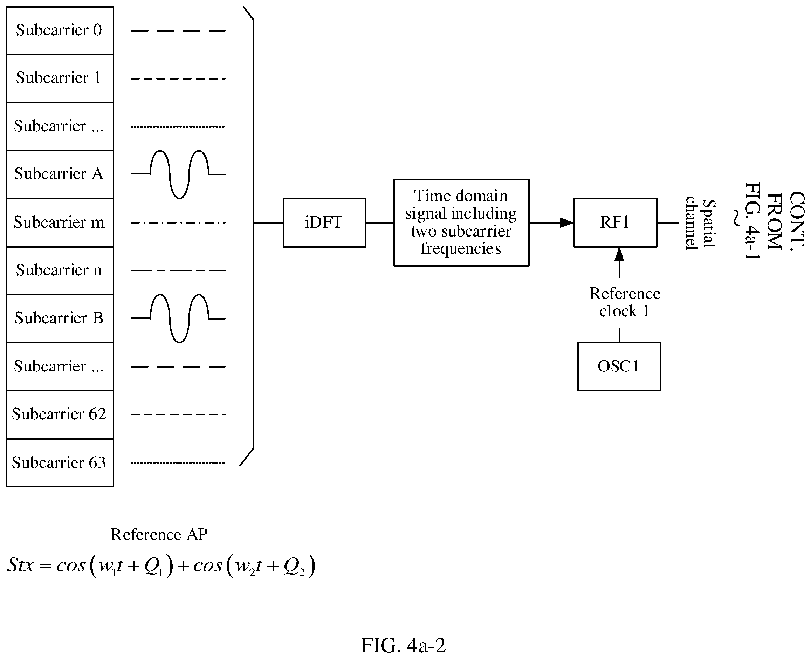

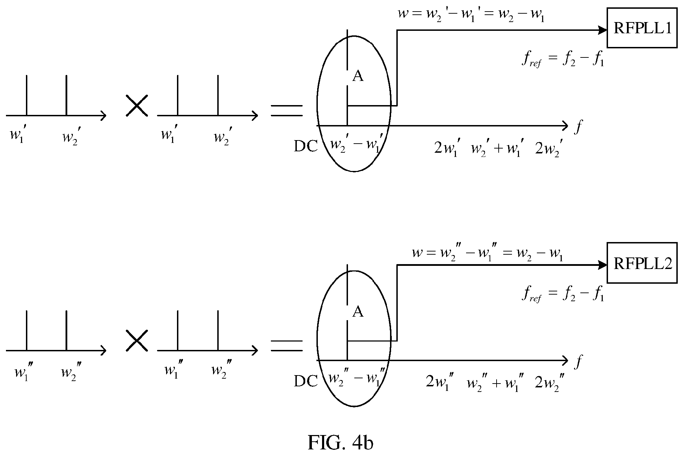

FIG. 4b is a schematic diagram of obtaining reference clocks with a same source according to an implementation of this application;

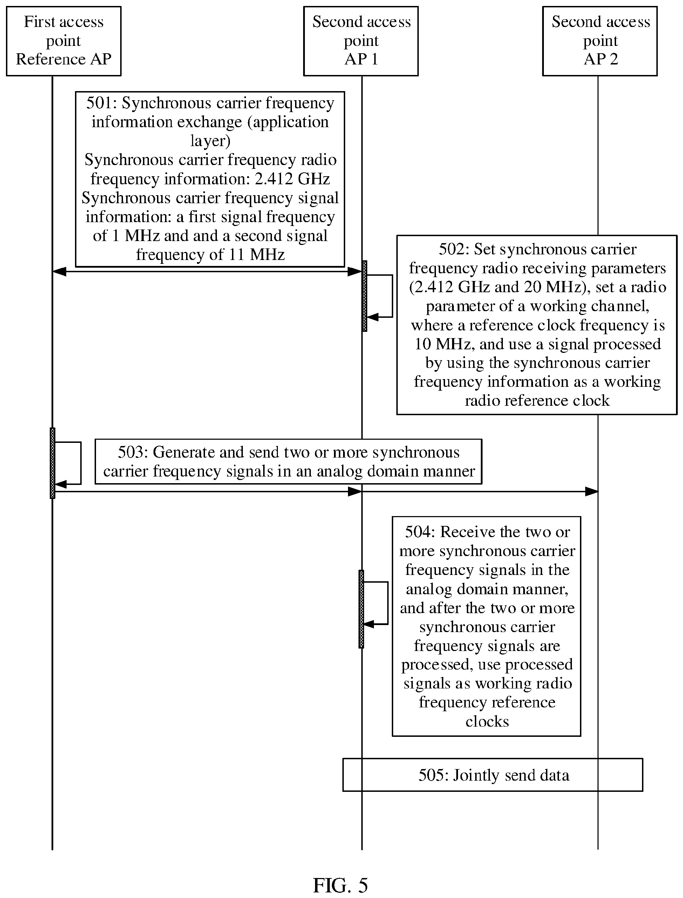

FIG. 5 is a signaling flowchart of another synchronous carrier frequency signal sending method according to an implementation of this application;

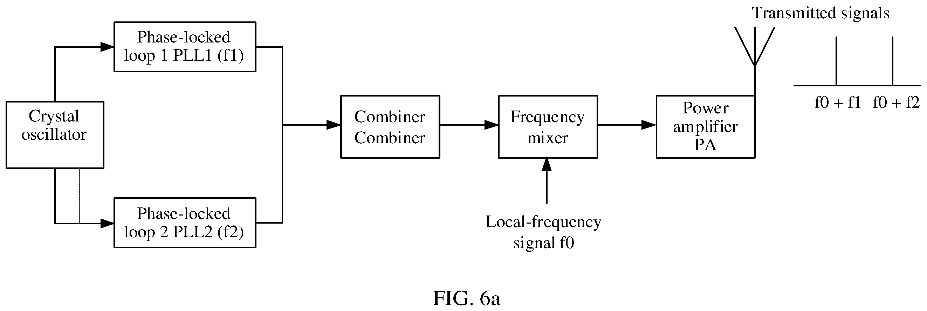

FIG. 6a is a flowchart of generating a synchronous carrier frequency signal by using an analog domain according to an implementation of this application;

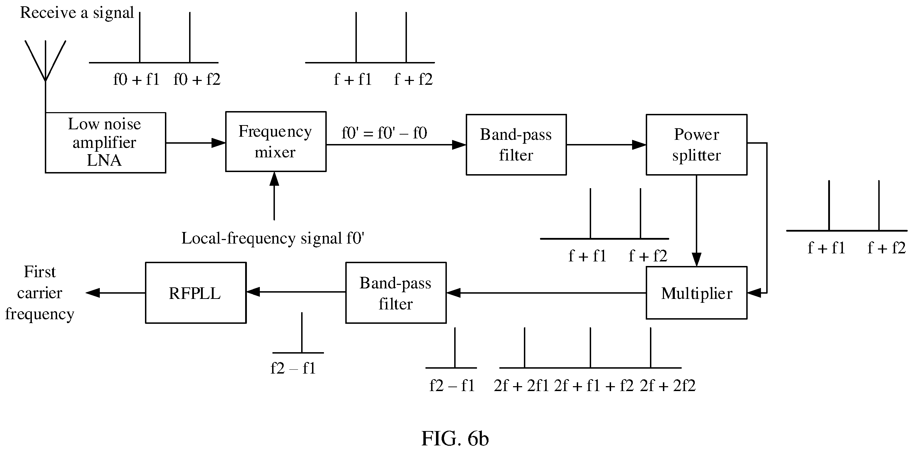

FIG. 6b is a flowchart of receiving a synchronous carrier frequency signal by using an analog domain according to an implementation of this application;

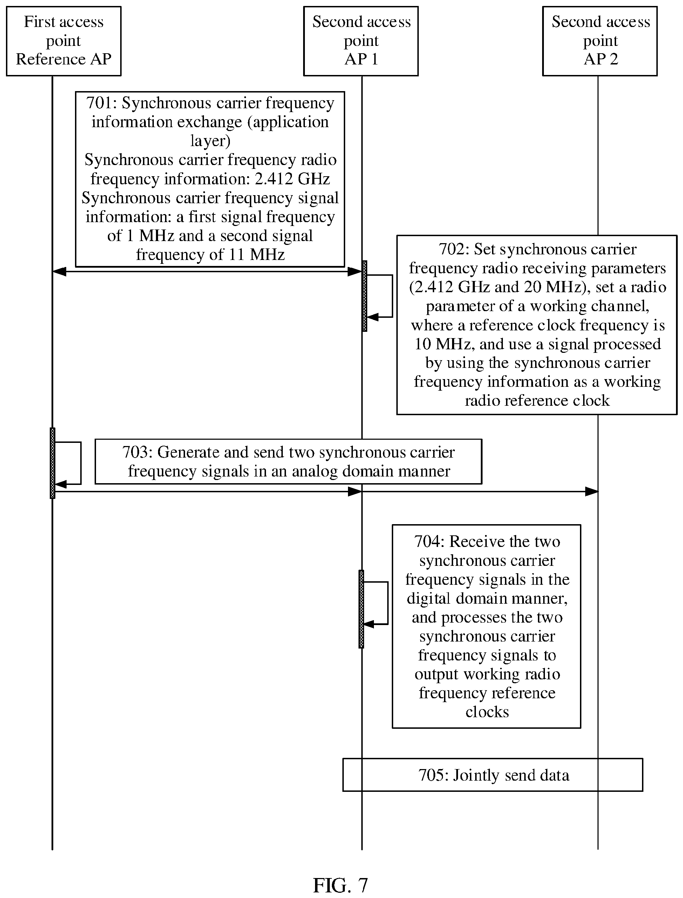

FIG. 7 is a signaling flowchart of still another synchronous carrier frequency signal sending method according to an implementation of this application;

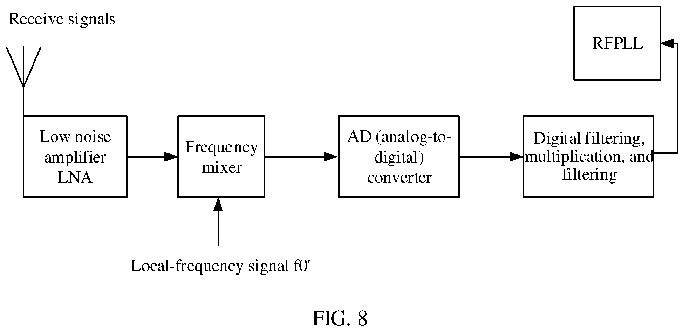

FIG. 8 is a flowchart of receiving a synchronous carrier frequency signal by using a digital domain according to an implementation of this application;

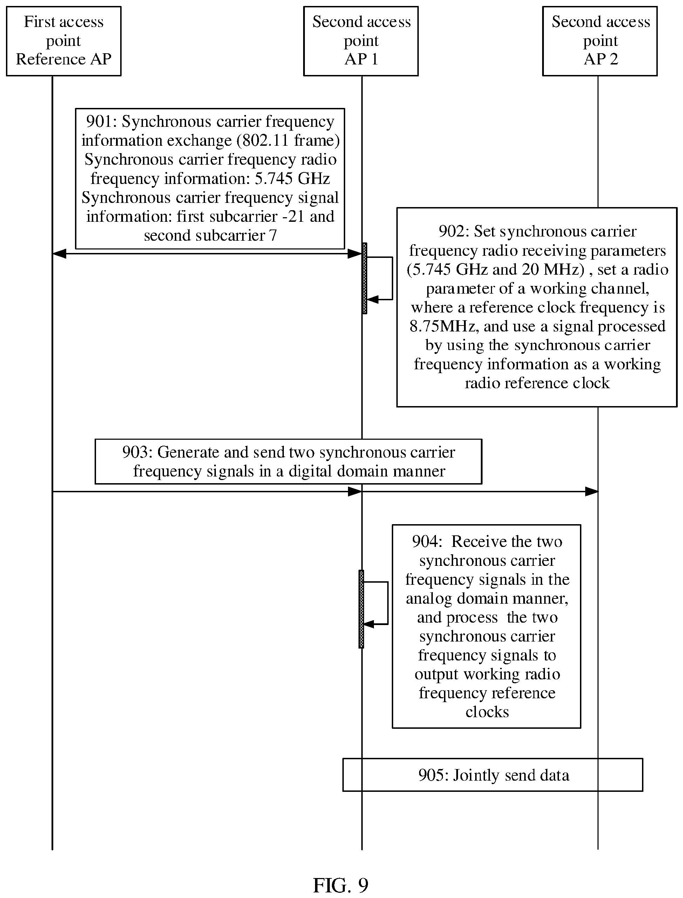

FIG. 9 is a signaling flowchart of still yet another synchronous carrier frequency signal sending method according to an implementation of this application;

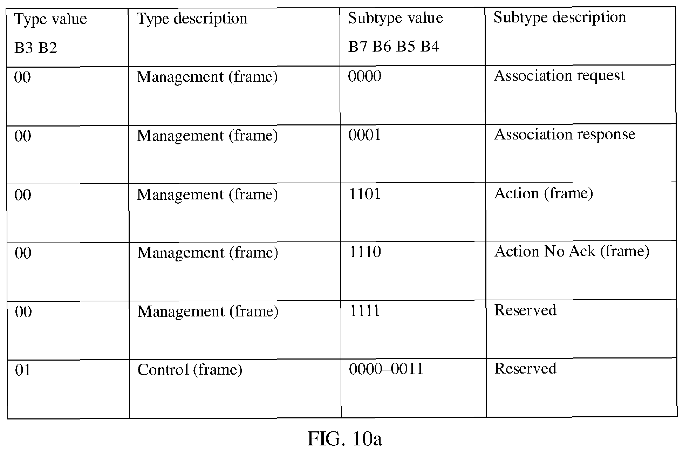

FIG. 10a is a schematic diagram of an 802.11 frame type according to an implementation of this application;

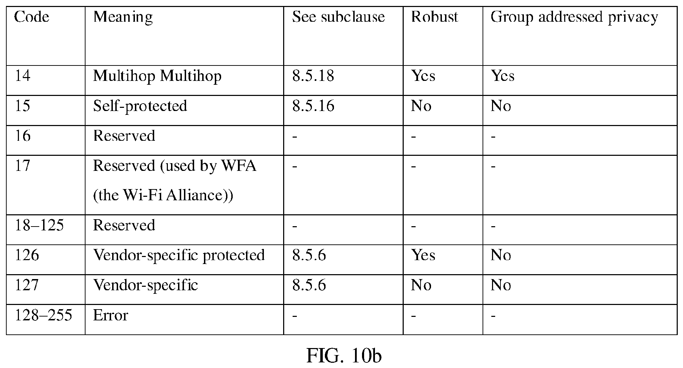

FIG. 10b is a schematic diagram of frames of different codes in an 802.11 frame type according to an implementation of this application;

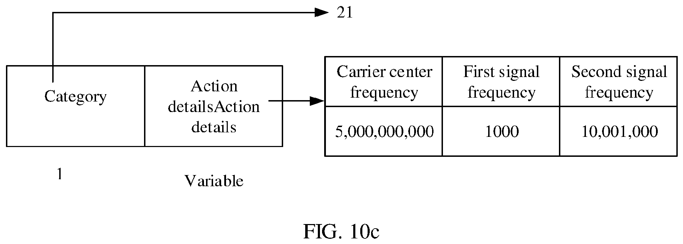

FIG. 10c is a schematic diagram of carrying synchronous carrier frequency signal information according to an implementation of this application;

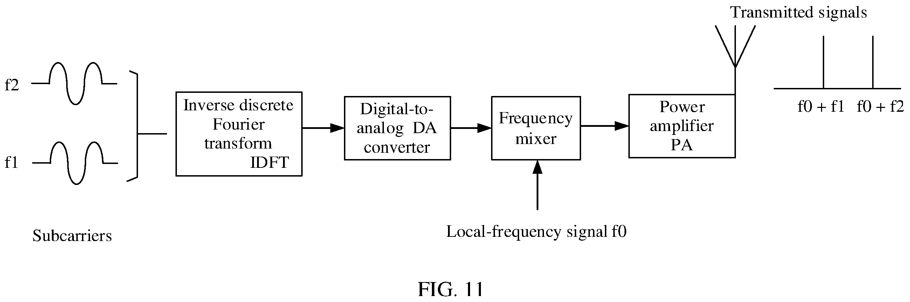

FIG. 11 is a flowchart of generating a synchronous carrier frequency signal by using a digital domain according to an implementation of this application;

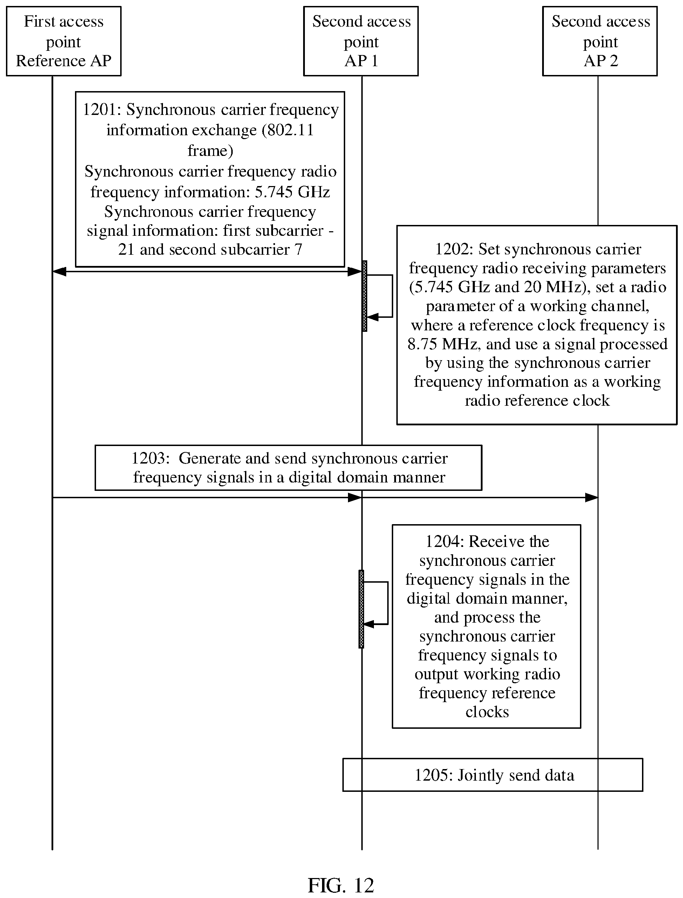

FIG. 12 is a signaling flowchart of a further synchronous carrier frequency signal sending method according to an implementation of this application;

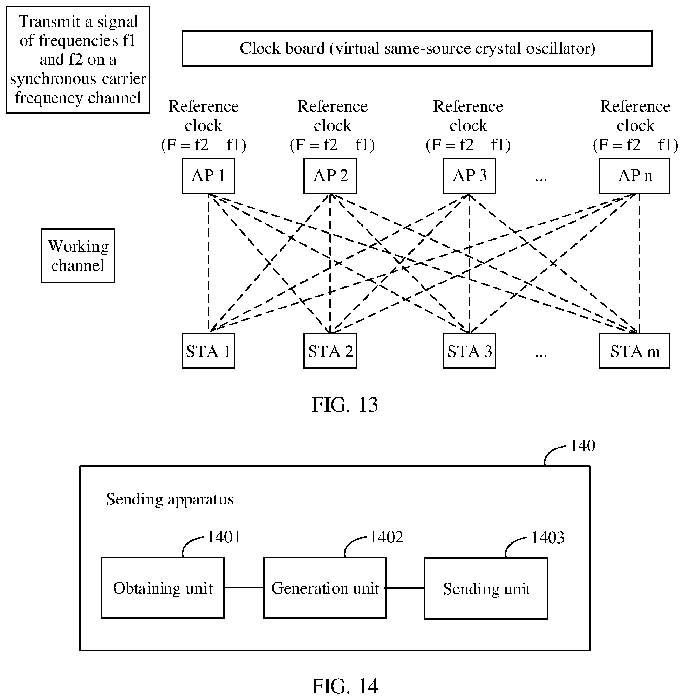

FIG. 13 is a schematic diagram of providing radio reference clocks of a same source for an AP by using signals on a synchronous carrier frequency channel according to an implementation of this application;
FIG. 14 is a schematic structural diagram of a synchronous carrier frequency signal sending apparatus according to an implementation of this application;

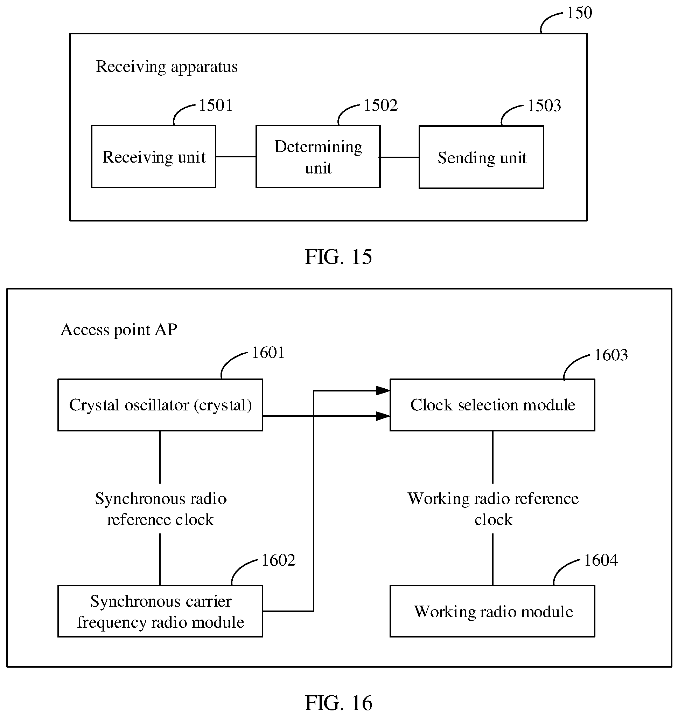

FIG. 15 is a schematic structural diagram of a synchronous carrier frequency signal receiving apparatus according to an implementation of this application;

FIG. 16 is a schematic structural diagram of an access point AP according to an implementation of this application; and

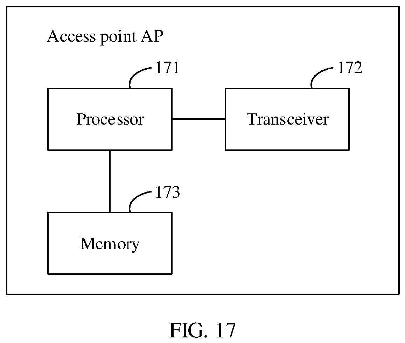

FIG. 17 is a schematic structural diagram of another access point AP according to an implementation of this application.

## DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

Before the technical solutions in the implementations of this application are described, technical terms and application scenarios that are mentioned in the implementations of this application are first described.

The technical solutions provided in the implementations of this application may be applied to a wireless communications scenario of distributed multiple-input multiple-output (multiple-input multiple-output, MIMO). The MIMO may be understood as a technology that enables wireless signals to be transmitted on a plurality of antennas of transmitters and receivers by increasing a quantity of antennas of wireless transceivers, to multiply a rate of a wireless communications system.

A difference of the distributed MIMO (or referred to as MIMO network) described in this application from a conventional MIMO technology lies in that, in the conventional MIMO technology, a plurality of antennas of transmitters are all centralized on one device, and different devices work independently, while transmitters in the distributed MIMO are located in different geographical locations, these transmitters can work and be managed in a coordinated manner, and on the side of a receiver, the transmitters in different locations can be considered to work as one device.

The following describes a system architecture or a scenario to which this application is applied.

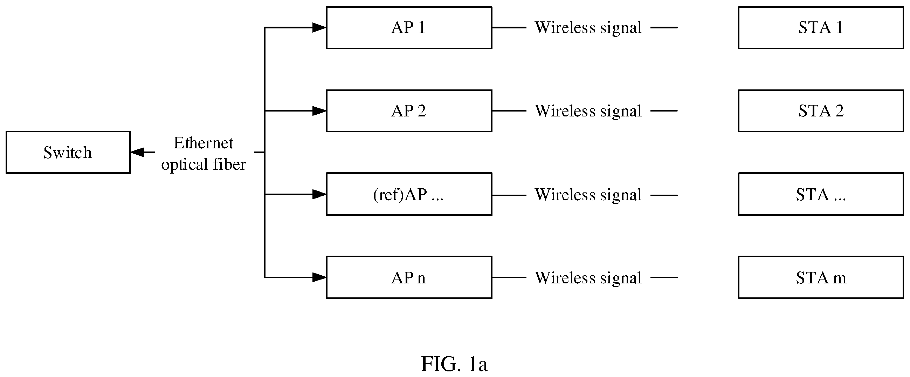

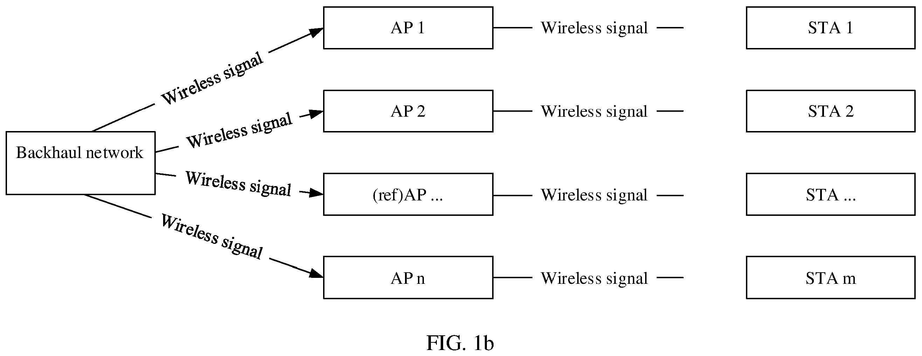

The implementations of this application may be applied to a scenario in which a distributed MIMO technology is used to perform wireless communication. Each access point (access point, AP) in distributed MIMO includes at least one antenna, and each mobile station (station, STA) includes at least one antenna. A distance between APs in the distributed MIMO is not limited in this application, and the distance may be one meter, 10 meters, hundreds of meters, several kilometers, or the like. The APs in the distributed MIMO may be connected in a wired (an Ethernet or an optical fiber) manner. These devices may be connected directly or by using a switch. For example, in an application scenario 1 shown in FIG. 1a, each AP is connected, in a wired manner, to a switch or a backhaul (Backhaul) network in which the switch is located, where a reference AP is one of APs in distributed MIMO. In another application scenario, APs may alternatively be connected to each other in a wireless manner. For example, in an application scenario 2 shown in FIG. 1b, each AP is connected to a backhaul network in a wireless manner, where a reference AP is one of APs in distributed MIMO. In the two cases, the reference AP is configured to send data to and receive data from another AP in the distributed MIMO.

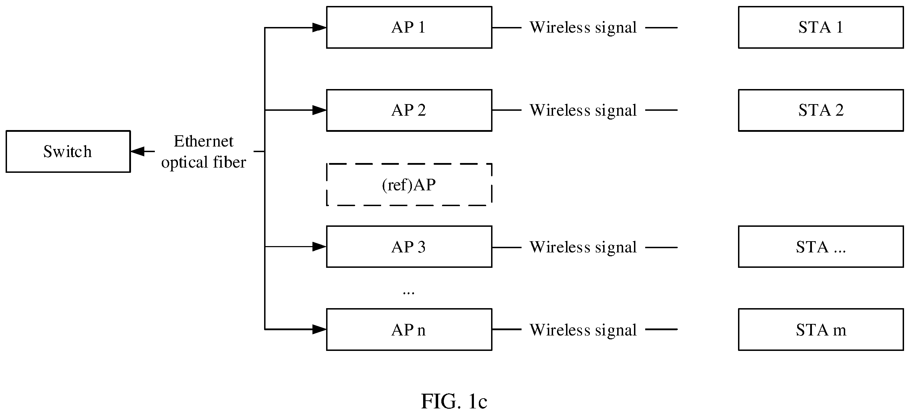

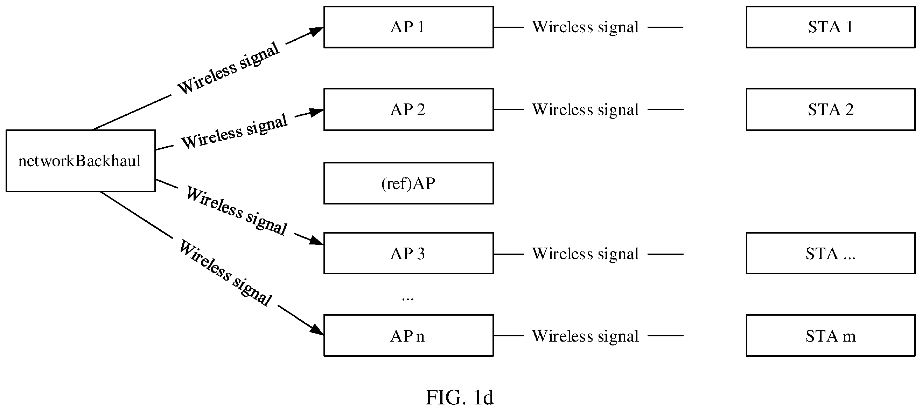

In addition, the reference AP in the application scenario 1 and the application scenario 2 may alternatively be an independent AP outside a distributed MIMO system. For example, in an application scenario 3 shown in FIG. 1c, each AP is connected, in a wired manner, to a switch or a backhaul network in which the switch is located, where a reference AP (ref AP) is an independent AP. For example, in an application scenario 4 shown in FIG. 1d, each AP is connected to a backhaul network in a wireless manner, where a reference AP is an independent AP. The reference AP may be configured to send a synchronous carrier frequency signal on a synchronous carrier frequency channel, and perform data transmission with each AP in distributed MIMO. The AP in the distributed MIMO may be configured to receive and process the synchronous carrier frequency signal from the reference AP, and use, as a working radio frequency reference clock of the AP, a signal output after the synchronous carrier frequency signal is processed.

A wireless signal (wireless signal) may be a signal in Wi-Fi (802.11) or LTE (3G, 4G, or 5G). In an application scenario in which each AP in MIMO is connected to a backhaul network in a wireless manner, a type of a wireless signal used for wireless connection may be the same as or different from a type of a wireless signal used for communication between an AP in distributed MIMO and a STA. In addition, this application may be further applied to respective evolved and related application scenarios of the foregoing four application scenarios. This is not limited in the implementations of this application.

To increase a throughput of a network, a MIMO technology is used starting from Wi-Fi 802.11n (a frame structure type) to increase a wireless throughput rate, where an 802.11 frame is updated with a version, and there are a plurality of types after update, and a type of an updated 802.11 frame may be compatible with a type before the update, to ensure that a data frame sent by an updated device can be received and parsed by a non-updated device. In different types of 802.11 frames, 802.11n and 802.11ac can support transmission of a maximum of four streams, and 802.11ax can support transmission of a maximum of eight streams. Because clocks of a same source are used on one AP, there is a small carrier frequency difference between antennas, or there is no carrier frequency difference between antennas. However, in actual environment deployment, due to factors such as a size limitation on an AP and strong correlation (mutual interference) between a plurality of antennas on a same AP, a quantity of antennas on the AP cannot be too large. For example, a current process level requires that the quantity of antennas should not exceed 8.

To further improve MIMO performance, MIMO network, also referred as to distributed MIMO, is proposed. In the MIMO network, a plurality of independent APs cooperate with each other, and antennas on all APs are considered as antennas on one AP. Because physical locations of the plurality of APs are scattered, correlation between the plurality of antennas is small. Therefore, a throughput of a network can be easily and simply increased by increasing a quantity of APs.

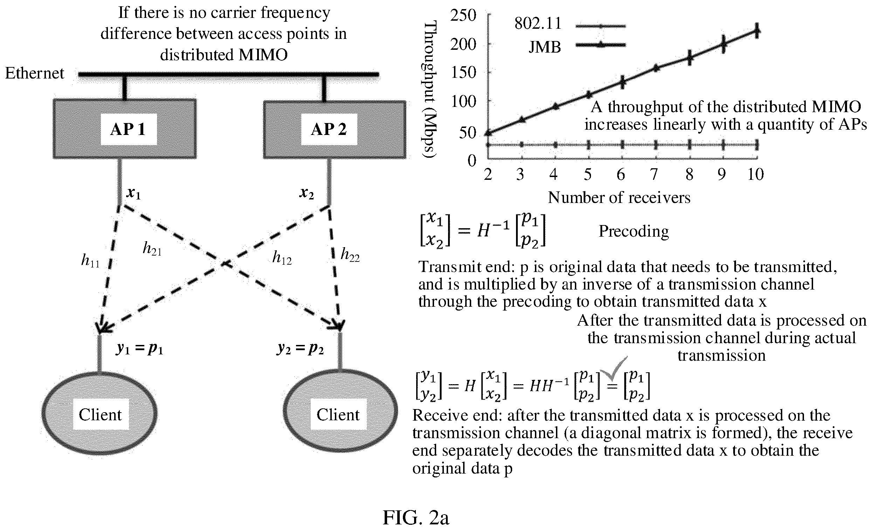

As shown in FIG. 2a, ideally, when there is no carrier frequency difference between APs, a principle is the same as a principle of implementing MIMO on a single device. At a transmit end, original data that needs to be transmitted is represented by "p", and is multiplied by an inverse of a transmission channel through precoding to obtain transmitted data x, and the transmitted data x is sent to a receive end. After the transmitted data x is processed on the transmission channel (a diagonal matrix is formed), the receive end separately decode the transmitted data x to obtain the original data p.

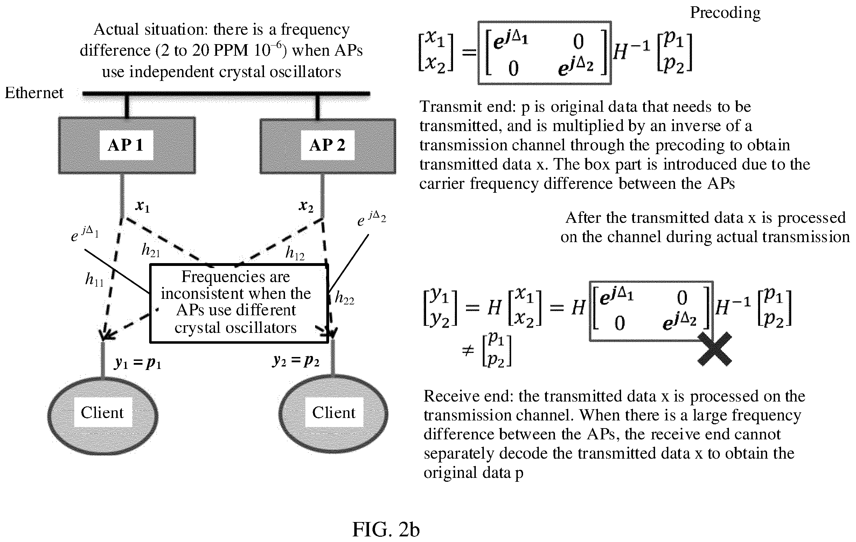

However, actual deployment of distributed MIMO is shown in FIG. 2b. There is a frequency difference between an AP1 and an AP2. For example, independent crystal oscillators respectively used by the AP1 and the AP2 cannot be exactly the same, and therefore, a frequency difference is generated. For example, in FIG. 2b, because a phase is rotated, for a transmitted signal, a phase error is constantly accumulated. As shown in the following formula, content in the box indicates a carrier frequency difference generated between APs.

$$\begin{bmatrix} x1 \\ x2 \end{bmatrix} = \begin{bmatrix} e^{j\Delta1} & 0 \\ 0 & e^{j\Delta2} \end{bmatrix} H^{-1} \begin{bmatrix} p1 \\ p2 \end{bmatrix}$$

After being processed on a channel, a signal at a receive end is represented as:

$$\begin{bmatrix} y1 \\ y2 \end{bmatrix} = H \begin{bmatrix} x1 \\ x2 \end{bmatrix} = H \begin{bmatrix} e^{j\Delta1} & 0 \\ 0 & e^{j\Delta2} \end{bmatrix} H^{-1} \begin{bmatrix} p1 \\ p2 \end{bmatrix} \neq \begin{bmatrix} p1 \\ p2 \end{bmatrix}$$

In this case, a relative phase of a signal obtained at the receive end is constantly rotated, and a bit error rate increases. As a result, the receive end cannot decode the signal. Therefore, a technology is required to support distributed APs in MIMO network in implementing carrier frequency synchronization, to increase a throughput of the MIMO network. The technical solutions provided in this application are intended to eliminate a carrier frequency difference between APs in the distributed MIMO, a plurality of deployed APs are not limited by an external environment, and extra costs are not increased.

The following describes the technical solutions of this application in detail.

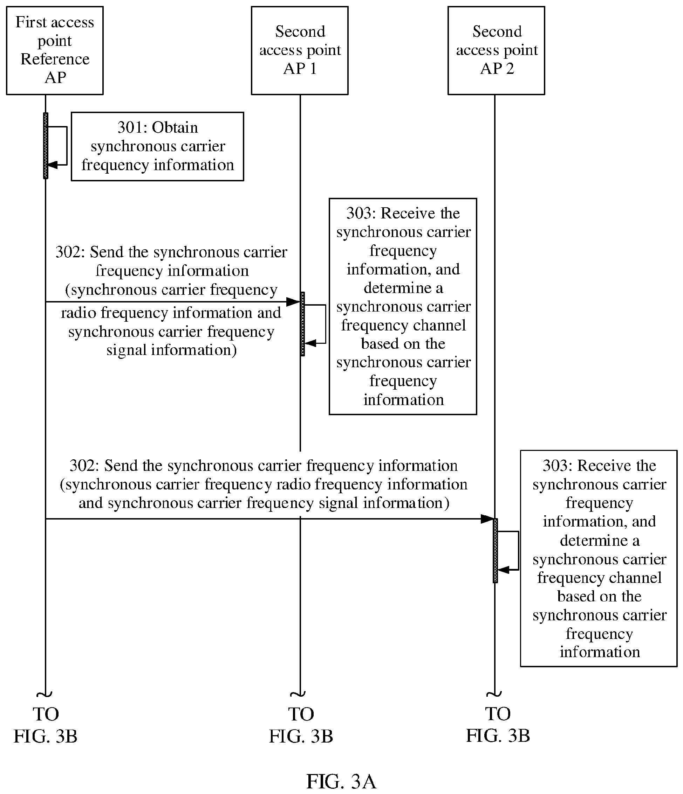

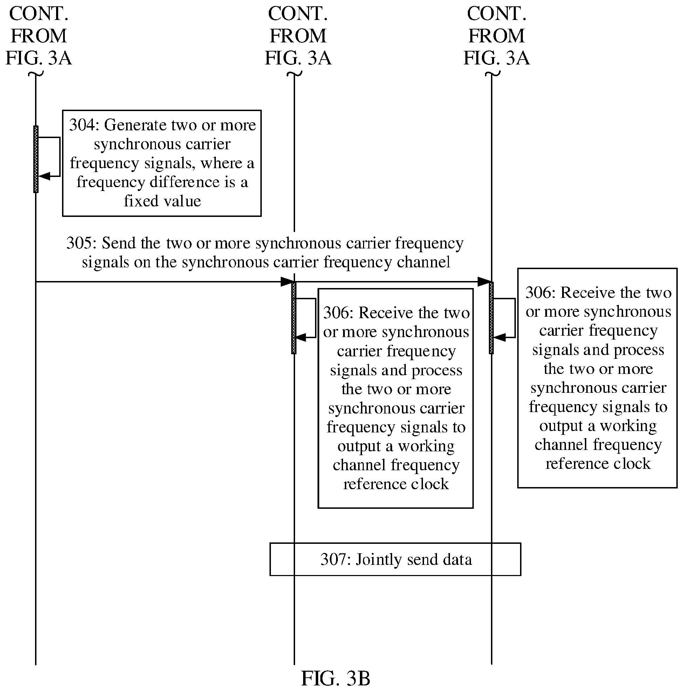

Referring to FIG. 3A and FIG. 3B, a synchronous carrier frequency signal sending method is provided. The method may be applied to various application scenarios in the foregoing distributed MIMO. The foregoing various application scenarios include at least a first access point and second access points. The first access point is a reference AP, and is configured to send synchronous carrier frequency information and synchronous carrier frequency signals to all second access points in the distributed MIMO. Specifically, the method includes the following steps.

301: The first access point obtains the synchronous carrier frequency information, where the synchronous carrier frequency information is used to set a synchronous carrier frequency channel for at least one second access point in the distributed multiple-input multiple-output MIMO. To be specific, the reference AP and an AP in the distributed MIMO exchange the synchronous frequency carrier information.

That the first access point obtains the synchronous carrier frequency information includes: The first access point receives the synchronous carrier frequency information from another device, or the first access point generates the synchronous carrier frequency information and obtains the synchronous carrier frequency information. A specific manner of obtaining the synchronous carrier frequency information is not limited in this implementation.

The synchronous carrier frequency information includes synchronous carrier frequency radio frequency information and synchronous carrier frequency signal information.

Further, the synchronous carrier frequency radio frequency information is used to determine a synchronous carrier frequency channel for sending a synchronous carrier frequency signal for the AP in the distributed MIMO. Optionally, the synchronous carrier frequency radio frequency information includes a carrier frequency or a channel number, for example, a channel number in 802.11, where the channel number corresponds to radio frequency resource information of a frequency and a specific bandwidth.

The synchronous carrier frequency signal information is used to provide related information of a synchronous reference signal to be sent to the AP in distributed MIMO, and the synchronous carrier frequency signal information includes a frequency of each synchronous carrier frequency signal, a quantity of synchronous carrier frequency signals and a frequency difference between the synchronous carrier frequency signals, a subcarrier number corresponding to a frequency of each synchronous carrier frequency signal, or the like. For example, the synchronous carrier frequency signal information includes a frequency of a synchronous carrier frequency signal (the synchronous carrier frequency signal information may alternatively be corresponding to a subcarrier number in 802.11), a frequency difference between two synchronous carrier frequency signals, a quantity of signals, a subcarrier number, or the like.

302: The first access point sends the synchronous carrier frequency information to the at least one second access point.

The synchronous carrier frequency information may be sent in a broadcast manner, or may be sent to each second access point in a unicast manner.

301 and 302 are a process of exchanging the synchronous carrier frequency information between the first access point and the AP in the distributed MIMO. Synchronous carrier frequency information exchange between APs may be performed by using an 802.11 frame, or may be performed by using an application layer, or may be performed by setting some fixed values on the APs. Currently, there is no corresponding type in the 802.11 frame to exchange such information, and the exchange may be implemented by extending code (code) of an existing action-type frame. Specifically, exchange processes of the foregoing various manners are described in detail in subsequent specific implementations in this application, and details are not described herein.

303: The second access point receives the synchronous carrier frequency information, and determines the synchronous carrier frequency channel based on the synchronous carrier frequency information.

Specifically, if the synchronous carrier frequency information includes the synchronous carrier frequency radio frequency information, and the synchronous carrier frequency radio frequency information includes a center frequency of a carrier frequency or a channel number corresponding to a carrier frequency, the second access point may determine the synchronous carrier frequency channel based on the center frequency of the carrier frequency or the channel number.

For example, if the center frequency that is of the carrier frequency and that is indicated in the synchronous carrier frequency radio frequency information is 2.412 GHz, or the carrier frequency is a channel number in 802.11, where each channel number corresponds to radio frequency resource information of one frequency and a specific bandwidth, the second access point determines, based on the synchronous carrier frequency radio frequency information, that a frequency of the synchronous carrier frequency channel is 2.412 GHz, or the second access point determines, based on the synchronous carrier frequency radio frequency information, a channel indicated by the channel number in 802.11.

In addition, the method further includes: setting, by the second access point, a related parameter based on the synchronous carrier frequency information.

Specifically, for example, after receiving the synchronous carrier frequency information, an AP1 or an AP2 in the distributed MIMO sets synchronous carrier frequency radio receiving parameters (such as a receiving frequency and a receiving frequency bandwidth), sets a radio parameter of a working channel, and sets a reference clock frequency for receiving/sending data, where the frequency may be used to set a parameter of a radio frequency phase-locked loop (radio frequency phase-locked loop, RFPLL). In addition, the method further includes: setting, by the AP in the distributed MIMO as a working radio reference clock, a signal processed by using a synchronous carrier frequency signal.

304: The first access point generates two or more synchronous carrier frequency signals, where the two or more synchronous carrier frequency signals are used to enable the at least one second access point to set at least one working radio frequency reference clock of the at least one second access point, and a frequency difference between the two or more synchronous carrier frequency signals is a fixed value.

The synchronous carrier frequency signals include at least two signals with different frequencies, where a frequency of each synchronous carrier frequency signal may change with time or may remain unchanged, but a frequency difference between the synchronous carrier frequency signals needs to be fixed, for example, 10 MHz.

305: The first access point sends the two or more synchronous carrier frequency signals on the synchronous carrier frequency channel.

The two or more synchronous carrier frequency signals may be located on a subcarrier corresponding to 802.11, or may be a plurality of independent tone signals, where the tone signal is a signal that includes only one frequency component.

Optionally, a process in which the first access point generates and sends the synchronous carrier frequency signals may be implemented by using an analog domain, or may be implemented by using a digital domain. A specific process of implementation by using the domain field or the digital domain is described in detail in a subsequent specific implementation.

306: The second access point receives the synchronous carrier frequency signals on a same synchronous carrier frequency channel, and processes the received synchronous carrier frequency signals to obtain a radio frequency reference clock of a working channel of the second access point.

The second access point receives the two or more synchronous carrier frequency signals from the first access point, and processes the received synchronous carrier frequency signals to obtain a first clock signal, where a frequency of the first clock signal is the frequency difference with the fixed value. The second access point configures the RFPLL based on the frequency of the first clock signal to obtain a first carrier frequency.

The carrier frequency may be defined as: A carrier or a carrier frequency (a carrier frequency) is a physical concept, and may refer to a radio wave with a specific frequency. A unit of the carrier frequency is Hz. In the field of wireless communications technologies, a carrier may be used to transfer information. For example, a digital signal is modulated onto a high frequency carrier and then the digital signal is transmitted in the air.

The second access point may receive and process the synchronous carrier frequency signals in an analog domain manner or a digital domain manner.

The following describes how to obtain a reference clock and an RFPLL of a working channel from mixed signals that include the two or more synchronous carrier frequency signals.

As shown in FIG. 4a-1 and FIG. 4a-2, a frequency of a signal received at a receive end is different from a frequency of a signal sent at a transmit end. A main cause is that crystal oscillators OSC1 and OSC2 are two independent crystal oscillators with different reference clocks. Therefore, output frequencies are also different and asynchronously change. In this way, there is a difference between the output frequencies. However, a frequency difference between two synchronous carrier frequency signals obtained on an AP in distributed MIMO is fixed and is always the same.

For example, an angular velocity w is represented as:

$$w_2{'}-w_1{'}=w_2-w_1,$$

where w1 represents an angular velocity of a sent first synchronous carrier frequency signal, w2 represents an angular velocity of a sent second synchronous carrier frequency signal, w1' represents an angular velocity of a received first synchronous carrier frequency signal, and w2' represents an angular velocity of a received second synchronous carrier frequency signal.

The received two synchronous carrier frequency signals are multiplied. A specific processing process is as follows:

$$Srx * Srx = \left( cos\left( w_1{'}t + Q_1{'}\right) + cos\left( w_2{'}t + Q_2{'}\right)\right) * \left( cos\left( w_1{'}t + Q_1{'}\right) + cos\left( w_2{'}t + Q_2{'}\right)\right),$$

where $Srx$ represents the received synchronous carrier frequency signal, Q represents an initial phase, and t represents time.

A frequency component obtained after each phase part is simplified is as follows:

$$\begin{aligned} Srx * Srx &= \left( cos\left( w_1{'}t\right) + cos\left( w_2{'}t\right)\right) * \left( cos\left( w_1{'}t\right) + cos\left( w_2{'}t\right)\right) \\ &= cos\left( w_1{'}t\right) * cos\left( w_1{'}t\right) + 2 * cos\left( w_2{'}t\right) * \left( cos\left( w_1{'}t\right) + cos\left( w_2{'}t\right) * cos\left( w_2{'}t\right)\right) \\ &= A_1 * cos\left( w_2{'}t - w_1{'}t\right) + A_2 * cos\left( 2w_1{'}t\right) + A_3 * cos\left( 2w_2{'}t\right) + A_4 * cos(w_1{'}t + w_2{'}t) + C \end{aligned},$$

where A represents an amplitude, and C is a constant.

If $w_2{'}-w_1{'}=w_2-w_1$ exists, the foregoing formula is derived as follows, where w2 - w1 is an expected radio frequency reference clock of a working channel:

$$w_2{'}-w_1{'} = A_1 * cos\left( w_2 t - w_1 t\right) + A_2 * cos\left( 2w_1{'}t\right) + A_3 * cos\left( 2w_2{'}t\right) + A_4 * cos(w_1{'}t + w_2{'}t) + C$$

After a direct current component and a high frequency component are filtered out by a band-pass filter, only signals with w2 - w1 frequency components are left, and other components are all filtered out. After the signals of w2 - 2w1 frequency components are processed by using the band-pass filter, an output signal is $A_1 * cos\left( w_2 t - w_1 t\right)$.

A reference clock, determined in this method, of a working channel of the AP in the distributed MIMO is not affected by a local crystal oscillator. After the received synchronous carrier frequency signals are processed, obtained frequency components are all f2 - f1 and are fixed values, so that radio frequency reference clocks of working channels of all APs in the distributed MIMO are similar to reference clocks of a same source. This avoids a frequency difference between APs.

As shown in FIG. 4b, an REPLL1 and an REPLL2 are respectively carrier frequencies output after being processed by the AP1 and the AP2.

$$w_{ref1} = w_2{}' - w_1{}' = w_2 - w_1$$

$$w_{ref2} = w_2{}'' - w_1{}'' = w_2 - w_1$$

Therefore, the AP1 and the AP2 finally obtain reference clocks with a same frequency. When there are more APs in the distributed MIMO, according to the method provided in this implementation, all signals that are finally output by all APs and are used as working radio frequency reference clocks have a same frequency.

307: The second access point sends data at the first carrier frequency. Specifically, the method includes: jointly sending, by all the APs in the distributed MIMO, the data at the first carrier frequency.

The second access point and another access point in the distributed MIMO jointly send the data at the first carrier frequency, where the first carrier frequency is a carrier frequency that is output by an AP in the distributed MIMO after being processed by an REPLL. A clock signal used when the another access point in the distributed MIMO sends the data is the same as the first clock signal. To be specific, all the APs in the distributed MIMO use the same frequency to transmit the data, thereby implementing synchronous sending of the data.

Further, 307 includes sending the data at a same moment after time synchronization and precoding operations are performed on a plurality of APs in the distributed MIMO. A specific process of joint data sending at a same moment is the same as an existing joint sending step, and details are not described in this application.

According to the method provided in this implementation, at a transmit end, a first access point sends synchronous carrier frequency information to at least one second access point, to indicate a channel on which a synchronous carrier frequency signal to be sent by each second access point is located, and then sends two or more synchronous carrier frequency signals on the indicated synchronous carrier frequency channel. At a receive end, each second access point first determines the synchronous carrier frequency channel based on the synchronous carrier frequency information, and then receives the two or more synchronous carrier frequency signals on the synchronous carrier frequency channel, and processes these synchronous carrier frequency signals. Because a frequency difference between these synchronous carrier frequency signals is fixed, reference clocks with a same frequency are obtained after the synchronous carrier frequency signals are processed, and the reference clock is used as a reference clock of a working channel, thereby eliminating a frequency difference between different access points caused by different reference clocks provided by crystal oscillators. In this method, frequency synchronization is implemented between different access points, and a throughput of a network is increased.

In addition, a difference of the method provided in this implementation from a method for reducing a frequency difference between APs by using a GPS clock as a reference clock lies in that the method provided in this implementation is not limited by an external environment. For example, the method provided in this implementation is not affected by occlusion of an indoor or outdoor building, has a wide application range, and can adapt to different environments. In addition, a difference of the method from a method in which a clock line is deployed by using a clock board to eliminate a frequency difference lies in that the method saves overheads.

It should be noted that the first access point, namely, the reference AP, in this implementation of this application may be one of the APs in the distributed MIMO, or an independent AP (which does not participate in the MIMO network) outside the distributed MIMO. If the reference AP is one of the APs in the distributed MIMO, a reference clock of a working channel of the reference AP may be a reference clock of a synchronous carrier frequency signal of the reference AP, or may be a clock signal restored after the synchronous carrier frequency signal is processed. The second access point generally refers to a type of access points, that is, a general term of the APs in the distributed MIMO. For example, in this implementation, the second access point includes the AP1 in the distributed MIMO and the AP2 in the MIMO.

In this implementation, a frequency difference between first carrier frequencies of APs in the distributed MIMO is very small (generally less than several Hz), or when the frequency difference is zero, the frequency difference between the APs is effectively eliminated.

**Implementation 1**

As shown in FIG. 5, in this implementation, synchronous carrier frequency information is exchanged by using an application layer. A reference AP generates and transmits, by using an analog domain, synchronous carrier frequency signals including two frequencies. An AP in distributed MIMO receives, by using the analog domain, the synchronous carrier frequency signals transmitted by the reference AP, and processes the synchronous carrier frequency signals and outputs processed synchronous carrier frequency signals serving as working radio reference clocks.

As shown in FIG. 5, a specific method is as follows:

501: Synchronous carrier frequency information is exchanged between an application layer of the reference AP (a first access point) and an application layer of the AP in the distributed MIMO. The synchronous carrier frequency information carries a radio frequency center frequency of 2.412 GHz of the reference AP, a first signal frequency of 1 MHz, and a second signal frequency of 11 MHz.

Optionally, the application layer of the reference AP may send a synchronous carrier frequency information indication to the AP in the distributed MIMO by using a UDP/TCP protocol, where the synchronous carrier frequency information indication includes the synchronous carrier frequency information.

The TCP (Transmission Control Protocol) protocol and the UDP (User Datagram Protocol) protocol are transport layer protocols. The TCP is used to provide reliable data transmission in an IP environment.

Specifically, the application layer of the reference AP sends the synchronous carrier frequency information indication to the application layer of the AP (a second access point) in the distributed MIMO. The application layer of the AP in the distributed MIMO feeds back indication acknowledgment information after receiving the synchronous carrier frequency information indication. The synchronous carrier frequency information indication may be sent from the application layer on the reference AP, or may be sent by an independent third party.

The synchronous carrier frequency information includes a center frequency of a carrier frequency (or a channel number in 802.11), synchronous carrier frequency signal information (a specific frequency value, a frequency difference, or a subcarrier number in 802.11), and the like.

502: A second access point AP1 receives the synchronous carrier frequency information indication, and sets a synchronous carrier frequency radio receiving parameter. Setting a synchronous carrier frequency radio receiving parameter specifically includes: setting a receiving center frequency to 2.412 GHz, and the receiving center frequency is the same as a frequency in the synchronous carrier frequency information sent by the reference AP. A synchronous carrier frequency radio RFPLL may be set based on a frequency of a crystal oscillator of the AP in the distributed MIMO. For example, a receiving bandwidth set in this implementation is 20 MHz.

In addition, the second access point AP1 may further set that a signal output after the synchronous carrier frequency signal is processed is used as a working radio reference clock.

Similarly, a second access point AP2 in the distributed MIMO also performs receiving and setting actions in step 502, and a specific process is not described in this implementation.

503: The reference AP generates and sends the synchronous carrier frequency signals in an analog domain manner.

A specific process includes: obtaining, by the reference AP, a frequency of a local crystal oscillator; obtaining output frequencies after the frequency of the local crystal oscillator is processed by using at least two phase-locked loops (PLLs), where the output frequency includes a frequency of each synchronous carrier frequency signal or a frequency difference between two synchronous carrier frequency signals; processing, by the reference AP, the output frequencies sequentially by using a combiner and a frequency mixer, where the frequency mixer is configured to mix a signal input to the frequency mixer with a local-frequency signal for outputting; and performing, by the reference AP, power amplification on signals output after being processed by using the frequency mixer, to obtain the synchronous carrier frequency signals.

For example, the reference AP sets parameters of two PLLs based on the output frequencies of the local crystal oscillator. The two PLLs are respectively a phase-locked loop 1 (PLL1) and a phase-locked loop 2 (PLL2), so that output frequencies of the two PLLs are respectively 1 MHz and 11 MHz. A synchronous carrier frequency radio transmit frequency is set to 2.412 GHz.

The reference AP sends the two synchronous carrier signals by using the analog domain.

As shown in FIG. 6a, output reference signals of a same crystal oscillator (oscillator) are given to a phase-locked loop 1 and a phase-locked loop 2. A frequency f1 ($w_1 = 2\pi f_1$) is output after the reference signal is processed by using the phase-locked loop 1, and a frequency f2 ($w_2 = 2\pi f_2$) is output after the reference signal is processed by using the phase-locked loop 2. The output frequencies f1 and f2 may be carried by using synchronous carrier frequency signal information and transmitted to an AP in distributed MIMO, or a frequency difference between the output frequencies f1 and f2 is delivered to an AP in distributed MIMO by using synchronous carrier frequency signal information.

The output frequencies f1 and f2 are output to a frequency mixer after being processed by using a combiner (combiner). The frequency mixer mixes an input signal with a local-frequency signal (which is a high frequency signal f0). Then, power amplification is performed on mixed signals by using a power amplifier, and finally amplified signals are transmitted by using an antenna. Frequencies of two synchronous carrier frequency signals transmitted after processed by using the power amplifier are f0 + f1 and f0 + f2.

504: An AP1 receives the two synchronous carrier frequency signals in an analog domain manner, and processes the two synchronous carrier frequency signals to obtain a first clock signal.

Processing the two synchronous carrier frequency signals to obtain a first clock signal specifically includes: amplifying, by the AP1, the two synchronous carrier frequency signals by using a low noise amplifier, and then processing the amplified signals by using the frequency mixer, where the frequency mixer is configured to mix the amplified signals input to the frequency mixer with a local-frequency signal for outputting; outputting, by using a power splitter, at least two channels of same signals from signals processed by using the frequency mixer; processing the at least two channels of same signals by using a multiplier to obtain a first mixed signal; and performing band-pass filtering processing on the first mixed signal to obtain the first clock signal.

For example, the AP1 obtains two frequency signals with a fixed frequency difference of 10 MHz by processing received synchronous carrier signals by using the low noise amplifier (LNA) and a frequency mixing module; outputs two channels of same signals by using the power splitter; and inputs the two channels of output signals to an analog signal multiplier to output mixed signals including four frequencies, and then processes the mixed signals by using a band-pass filter. Only a signal of 10 MHz, namely, a first clock signal (f2 - f1), is left. Then, a frequency of the first clock signal is used as a working radio frequency reference clock of the AP1.

As shown in FIG. 6b, after being propagated, signals transmitted by a reference AP are coupled to an LNA by using a receiving antenna, and two tone signals of f + f1 and f + f2 are obtained by using a local frequency mixer, where f = f0' - f0. Then, another interference signal is eliminated by using a band-pass filter, and signals whose interference signal is eliminated are sent to a power divider (a power splitter) to obtain two channels of signals with a same frequency through division, and then the two channels of signals are output and sent to a multiplier. The multiplier outputs tone signals including four frequencies and a direct current signal. The four frequencies are respectively f2 - f1, 2f + 2f1, 2f + f1 + f2, and 2f + 2f2. These output signals are filtered by the band-pass filter, and signals (expected signals) of remaining f2 - f1 frequencies are output, that is, the first clock signal is output. In this implementation, a frequency of the first clock signal is 10 MHz.

The AP1 uses the first clock signal as a working radio frequency reference clock, and configures an RFPLL by using a radio frequency clock reference signal to obtain a first carrier frequency.

Similarly, an AP2 in distributed MIMO also receives and processes synchronous carrier frequency signals, obtains a first clock signal of 10 MHz, and sets the first clock signal as a working radio frequency reference clock of the AP2 and obtain a first carrier frequency.

505: The AP1 and the AP2 jointly send data at the first carrier frequency, where both the AP1 and the AP2 in the distributed MIMO use radio frequency reference clocks of a same frequency.

According to the method provided in this implementation, the reference AP generates the two or more synchronous carrier frequency signals in the analog domain manner. In this manner, a calculation amount is small, and only a relatively small processing resource is occupied. Therefore, a synchronous carrier frequency signal can be generated conveniently and quickly.

**Implementation 2**

As shown in FIG. 7, in this implementation, synchronous carrier frequency signal information is exchanged by using an application layer. A reference AP transmits, by using an analog domain, synchronous carrier frequency signals including two frequencies. An AP in distributed MIMO receives, by using a digital domain, the signals transmitted by the reference AP, and processes the signals to use processed signals as working radio frequency reference clocks.

A difference of implementation 2 from implementation 1 lies in that the AP in the distributed MIMO in this implementation receives the synchronous carrier frequency signals sent by the reference AP by using the digital domain, and processes the synchronous carrier frequency signals to generate a first clock signal, and outputs the first clock signal.

Specifically, referring to FIG. 7, the method includes the following steps.

701: An application layer of the reference AP exchanges the synchronous carrier frequency information with an application layer of the AP in the distributed MIMO. A radio frequency center frequency of the reference AP is 2.412 GHz, a frequency of a first signal is 1 MHz, and a frequency of a second signal is 11 MHz.

702: After receiving the synchronous carrier frequency information, the AP in the distributed MIMO sets a synchronous carrier frequency radio receiving parameter, sets a receiving center frequency to 2.412 GHz (sets a synchronous carrier frequency radio RFPLL based on a frequency of a crystal oscillator of the AP), and sets a receiving bandwidth to 20 MHz. A signal processed by using a synchronous carrier frequency signal is used as the working radio frequency reference clock.

In addition, the AP in the distributed MIMO determines a to-be-sent synchronous carrier frequency channel based on a channel number in the synchronous carrier frequency information or a center frequency.

703: The reference AP generates and sends two synchronous carrier frequency signals in an analog domain manner.

The reference AP sets parameters of two PLLs based on output frequencies of a local crystal oscillator, so that output frequencies of the two PLLs are 1 MHz and 11 MHz, and sets a synchronous carrier frequency radio transmit frequency is 2.412 GHz. For specific generation and transmission processes, refer to the description in implementation 1, and details are not described in this implementation.

704: The AP1 receives the two synchronous carrier frequency signals in a digital domain manner, processes the two synchronous carrier frequency signals, and uses processed signals as working radio frequency reference clocks of the AP1.

Specifically, the AP1 amplifies the two synchronous carrier frequency signals by using a low noise amplifier, and then processes the amplified signals by using a frequency mixer, where the frequency mixer is configured to mix the amplified signals input to the frequency mixer with a local-frequency signal for outputting; performs analog-to-digital conversion on signals processed by using the frequency mixer, and adds or subtracts frequencies of converted signals in the digital domain to obtain a second mixed signal; and performs band-pass filtering processing on the second mixed signal to obtain a first clock signal.

Specifically, the AP1 obtains two frequency signals with a frequency difference of 10 MHz by processing received synchronous carrier frequency signals by using the LNA and a frequency mixing module, and then performs the analog-to-digital conversion on the two frequency signals, and adds or subtracts the two frequency signals in the digital domain to output mixed signals with four frequencies, after the mixed signals are filtered, a signal of 10 MHz is left, and the signal is set as the first clock signal, and finally, the first clock signal is set as the working radio frequency reference clock of the AP1.

As shown in FIG. 8, after propagated, signals transmitted by a reference AP are coupled to an LNA by using a receiving antenna, and two tone signals of f + f1 and f + f2 are obtained by using a local frequency mixer, where f = f0' - f0. Then, digital filtering is performed on the tone signals to obtain mixed signals of two synchronous carrier frequency signals including f1' and f2', and the mixed signals are added/subtracted in a digital domain manner. After the mixed signals are filtered by a band-pass filter, a first clock signal f2 - f1 is output, serving as a working radio reference clock of an AP in distribute MIMO.

A distributed AP1 and a distributed AP2 each set an RFPLL based on the first clock signal, and output a first carrier frequency.

705: The distributed AP1 and the distributed AP2 jointly send data at the first carrier frequency.

In this implementation, an AP at a receive end generates synchronous carrier frequency signals in a digital domain manner. In this process, different subcarriers may be selected to determine a frequency difference between different carrier frequency signals. Selection manners are flexible and diversified, and interference from an external environment may be further avoided in actual running. For example, after synchronous carrier frequency signals with a group of different frequencies are selected and simulated, when it is found that an effect of eliminating a carrier frequency difference caused by an environment is not ideal, different subcarriers may be re-selected to determine different frequency differences. In this way, a carrier frequency difference between re-simulated and synchronized carrier frequency signals of APs meets a network requirement.

**Implementation 3**

According to the method provided in this implementation, synchronous carrier frequency information is exchanged by using an 802.11 frame. A reference AP transmits, by using a digital domain, synchronous carrier frequency signals including two frequencies. An AP in distributed MIMO receives, by using an analog domain, the signals transmitted by the reference AP, and processes the signals to use processed signals as working radio frequency reference clocks.

As shown in FIG. 9, a method specifically includes the following steps.

901: A MAC layer of a reference AP exchanges synchronous carrier frequency information with a MAC layer of an AP in distributed MIMO. Optionally, the synchronous carrier frequency information is sent and received on a MAC layer by using an 802.11 frame.

The synchronous carrier frequency information includes the following information: a radio frequency center frequency of the reference AP is 5.745 GHz, a number of a first subcarrier is "- 21", and a number of a second subcarrier is "7". Because each subcarrier number corresponds to one frequency, a frequency difference between the two frequencies may be obtained through calculation based on the numbers of the first subcarrier and the second subcarrier. In this implementation, the corresponding frequency difference between the first subcarrier and the second subcarrier is 8.75 MHz (8750 = (7 - (-21)) x 312.5 kHz).

Optionally, in this implementation, the 802.11 frame is implemented by using an 802.11 action frame. There are two types of 802.11 action frames. One type requires feedback acknowledgment, and the other type does not require feedback acknowledgment. Specific differentiation may be determined based on a value of a field Subtype in the 802.11 frame.

FIG. 10a shows some types and some subtypes of 802.11 frames. An 802.11 action frame in this implementation of this application may be a type that requires feedback acknowledgment, or may be a type that does not require feedback acknowledgment. If the 802.11 action frame that does not require feedback acknowledgment is used, an acknowledgment packet is sent by using a MAC layer or an application layer.

Bx represents a quantity of digits. For example, B1 represents the first digit.

Further, the selected 802.11 action frame is a frame that has reserved space or a frame that can carry information. Specifically, the 802.11 action frame may be implemented by extending a code (code) of an action frame. As shown in FIG. 10b, an 802.11 action frame is divided into a plurality of different codes, for example, codes 14 to 255. Information content is not set in action frames of some codes, and these action frames are used as reserved frames, for example, code 16 and codes 18 to 125. Further, the action frame of this code may be used to carry synchronous carrier frequency signal information.

As shown in FIG. 10c, synchronous carrier frequency signal information is carried by using an 802.11 action frame of a code 21. In "Action Details", a carrier center frequency is 5 GHz, a first signal frequency is 1 kHz, and a second signal frequency is 10001 kHz (10 MHz + 1 kHz). It should be noted that, when the synchronous carrier frequency signal information is configured for the 802.11 action frame, different formats may alternatively be used as long as similar information can be expressed. A format is not limited in this implementation of this application.

In addition, it should be noted that, in a process of exchanging synchronous carrier frequency information between a reference AP and an AP in distributed MIMO, synchronous carrier frequency radio frequency information and synchronous carrier frequency signal information may be sent respectively, where the two types of information may be sent in a same manner, or sent in different manners. For example, the reference AP may deliver, in a subcarrier number manner in 802.11, frequencies of a first synchronous carrier frequency signal and a second synchronous carrier frequency signal and a frequency difference. The frequencies of the first synchronous carrier frequency signal and the second synchronous carrier frequency signal are delivered in an 802.11n frame and an 802.11ac frame, and a frequency difference between adjacent subcarriers is 312.5 kHz. A center frequency of a carrier in the synchronous carrier frequency radio frequency information may be represented by a channel number in the 802.11 frame. Because different channel numbers correspond to specific center frequencies and radio resources with specific frequency bandwidths in each country, a center frequency for receiving a carrier frequency may be determined by delivering a channel number.

In this implementation, transmitting the synchronous carrier frequency information in an 802.11 frame manner may avoid interaction between the reference AP and a distributed AP at an application layer. The distributed AP can quickly determine a synchronous carrier frequency channel and set a related parameter. In this way, transmission time is saved and transmission efficiency is increased.

902: After receiving the synchronous carrier frequency information, an AP1 sets a synchronous carrier frequency radio receiving parameter. The AP1 sets a receiving center frequency to 5.745 GHz, sets a receiving bandwidth to 20 MHz, sets, as a working radio frequency reference clock, a signal processed by using a synchronous carrier frequency signal, and prepares to receive, based on a channel corresponding to a channel number, the synchronous carrier frequency signals sent by the reference AP.

903: The reference AP generates and sends two synchronous carrier frequency signals in a digital domain manner.

903 specifically includes: determining, by the reference AP, two or more subcarriers; generating a time domain signal by performing inverse discrete Fourier transform (Inverse Discrete Fourier Transform, IDFT) on the two or more subcarriers, where the time domain signal includes two or more frequency components; performing digital-to-analog conversion on the time domain signal by using a digital-to-analog converter (DAC), and then processing a converted signal by using a frequency mixer, where the frequency mixer is configured to mix the converted signal input to the frequency mixer with a local-frequency signal for outputting; and performing power amplification on signals output after being processed by using the frequency mixer, to obtain the two or more synchronous carrier frequency signals.

For a specific change process of the inverse discrete Fourier transform, refer to a change process of a discrete Fourier transform, and details are not described in this implementation.

In this implementation, a transmit frequency of the synchronous carrier frequency signal is set to 5.745 GHz.

As shown in FIG. 11, a reference AP selects two subcarriers from 64 subcarriers (256 subcarriers). Specifically, which subcarriers to be selected may be determined based on synchronous carrier frequency signal information, and then the selected two subcarriers are assigned a fixed signal, for example, a + bi, where a + bi is a preset value. An amplitude value of another subcarrier is set to 0. Then, the subcarriers are converted into a time domain signal (the signal includes two frequency components: f1 and f2) by using an IDFT operation, and then a converted time domain signal is sent to a frequency mixer after DA conversion is performed on the time domain signal. After being processed by using the frequency mixer, frequencies of the signal include components f0 + f1 and f0 + f2, and then power amplification is performed on the signals by using a power amplifier, and amplified signals are transmitted by using an antenna.

904: The AP1 receives the two synchronous carrier frequency signals in an analog domain manner, processes the two synchronous carrier frequency signals, and outputs processed signals as working radio frequency reference clocks of the AP1.

Specifically, the AP1 receives the two synchronous carrier frequency signals, and then obtains two frequency signals with a frequency difference of 8.75 MHz by processing received signals by using an LNA and a frequency mixing module, and outputs two channels of same signals by using a power splitter. The output two channels of same signals are input into an analog signal multiplier to output mixed signals including four frequencies. After the mixed signals are processed by using a band-pass filter, only a signal of 8.75 MHz is left, and the signal of 8.75 MHz is output as a working radio reference clock. To be specific, an REPLL is set to output a first carrier frequency.

905: The AP1 and an AP2 jointly transmit data based on the set working radio frequency reference clock.

According to the method provided in this implementation, the reference AP generates the synchronous carrier frequency signals in the digital domain manner, so that a frequency difference between the synchronous carrier frequency signals can be flexibly set and selected, thereby avoiding being affected by an external environment. In addition, a working radio frequency reference clock can be quickly determined and set by using the analog domain, thereby further increasing synchronization efficiency between APs.

**Implementation 4**

According to the method provided in this implementation, synchronous carrier frequency information is exchanged by using an application layer. A reference AP transmits, by using an analog domain, synchronous carrier frequency signals including two frequencies. An AP in distributed MIMO receives, by using the analog domain, the signals transmitted by the reference AP, and uses processed signals as working radio frequency reference clocks.

FIG. 12 is a signaling flowchart of a synchronous carrier frequency signal sending method according to this implementation. Specifically, the method includes the following steps.

Processes of 1201 to 1203 are the same as those of 901 to 903 in the implementation 3. For detailed processes, refer to descriptions in the implementation 3, and details are not described in this implementation.

1204: An AP1 receives synchronous carrier frequency signals in a digital domain manner, processes these synchronous carrier frequency signals, and outputs processed signals as working radio frequency reference clocks of the AP1.

1204 specifically includes: amplifying received two synchronous carrier frequency signals by using a low noise amplifier, and then processing the amplified signals by using a frequency mixer, where the frequency mixer is configured to mix the amplified signals input to the frequency mixer with a local-frequency signal for outputting; performing analog-to-digital conversion on signals processed by using the frequency mixer, and multiplying converted signals in the digital domain to obtain a second mixed signal; and performing band-pass filtering processing on the second mixed signal to obtain a first clock signal.

For example, the AP1 and an AP2 obtain two frequency signals including a frequency difference of 8.75 MHz by processing received synchronous carrier frequency signals by using the LNA and a frequency mixing module, and then perform digital sampling on the two signals, output mixed signals including four frequencies after multiplying the two signals, and process the mixed signals by using a band-pass filter. Only a signal of 8.75 MHz, namely, the first clock signal, is left, and then the first clock signal is used as a working radio reference clock for the AP1 and the AP2.

1205: The AP1 and the AP2 jointly send data based on the set radio working reference clock.

In this implementation, the reference AP and an AP in a distributed network respectively generate and receive synchronous carrier frequency signals in a digital domain manner. Different subcarriers are selected to determine a frequency difference between different carrier frequency signals. Selection manners are flexible and diversified, and interference from an external environment may be further avoided in actual running.

In this method, because two or more synchronous carrier frequency signals set by a reference AP at a transmit end have a fixed frequency difference, after the two or more synchronous carrier frequency signals are processed by an AP at a receive end, signals with a fixed frequency difference are finally left, and the signals are used as radio frequency reference clocks of a working channel. In this way, a purpose of synchronous transmission of different distributed APs with a same reference clock is achieved, thereby implementing carrier frequency synchronization for data transmission between access points in distributed MIMO, and eliminating a frequency difference that is between different access points and that is caused by different reference clocks provided by crystal oscillators. In this method, frequency synchronization between different access points is implemented, and a throughput of a network is increased.

In addition, in this method, same radio frequency reference clocks (f = f2 - f1) of a working channel can be achieved for APs in the distributed MIMO with no need to configure a clock board in MIMO network. This is equivalent to configuring a virtual crystal oscillator or a clock board to provide a reference clock for each AP. As shown in FIG. 13, in this method, cost overheads of configuring a clock board to provide a same-source clock for each AP are saved, a frequency difference between APs is effectively eliminated, and accuracy of synchronization between carrier frequencies is improved, so that each AP in the distributed MIMO is deployed more easily. In addition, a difference of this method from a conventional method in which a GPS clock is used as a same-source reference clock to resolve a frequency difference between APs lies in that this method can avoid a defect that deployment of the GPS clock is limited by an environment, and it is not worried that a GPS signal is blocked by a building. Configuration is more flexible and more reliable.

FIG. 14 is a schematic structural diagram of a synchronous carrier frequency signal sending apparatus according to an implementation of this application. The synchronous carrier frequency signal sending apparatus may be the first access point or the reference AP in any foregoing implementation, and is configured to implement the steps of method in the foregoing implementations.

As shown in FIG. 14, the sending apparatus 140 may include an obtaining unit 1401, a generation unit 1402, and a sending unit 1403. In addition, the sending apparatus 140 may further include more or fewer components, for example, a storage unit. This is not limited in this application.

Further, the obtaining unit 1401 is configured to obtain synchronous carrier frequency information, where the synchronous carrier frequency information is used to set a synchronous carrier frequency channel for at least one second access point.

The sending unit 1403 is configured to send the synchronous carrier frequency information to the at least one second access point.

The generation unit 1402 is configured to generate two or more synchronous carrier frequency signals, where the two or more synchronous carrier frequency signals are used to enable the at least one second access point to set at least one working radio frequency reference clock of the at least one second access point, and a frequency difference between the two or more synchronous carrier frequency signals is a fixed value.

The sending unit 1403 is further configured to send the two or more synchronous carrier frequency signals on the synchronous carrier frequency channel.

The synchronous carrier frequency information includes synchronous carrier frequency radio frequency information and synchronous carrier frequency signal information. The synchronous carrier frequency radio frequency information includes a center frequency of a carrier frequency or a channel number corresponding to a carrier frequency. The synchronous carrier frequency signal information includes a frequency of each synchronous carrier frequency signal, a quantity of synchronous carrier frequency signals and a frequency difference between the synchronous carrier frequency signals, or a subcarrier number corresponding to a frequency of each synchronous carrier frequency signal.

Optionally, in a specific implementation of this implementation of this application, the sending unit 1403 is specifically configured to: send a synchronous carrier frequency information indication to the at least one second access point by using a UDP or a TCP, where the synchronous carrier frequency information indication includes the synchronous carrier frequency information; or send a first frame to the at least one second access point by using a MAC layer, where the first frame carries the synchronous carrier frequency information.

Optionally, in another specific implementation of this implementation of this application, the generation unit 1402 is specifically configured to: obtain a frequency of a local crystal oscillator; obtain output frequencies by processing the frequency of the local crystal oscillator by using at least two phase-locked loops (PLLs), where the output frequency includes a frequency of each synchronous carrier frequency signal or a frequency difference between two synchronous carrier frequency signals; combine the output frequencies into a channel of signals by using a combiner and output the channel of signals; input the channel of signals output from the combiner into a frequency mixer for processing; and perform power amplification on signals output after the channel of signals are processed by using the frequency mixer, to obtain the two or more synchronous carrier frequency signals.

The frequency mixer is configured to mix the channel of signals input to the frequency mixer with a local-frequency signal for outputting.

Optionally, in still another specific implementation of this implementation of this application, the generation unit 1402 is specifically configured to: determine two or more subcarriers, set amplitude values of the two or more subcarriers to a preset value, and set amplitude values of remaining subcarriers other than the selected two or more subcarriers to zero; generate a time domain signal by performing inverse discrete Fourier transform (IDFT) on the two or more subcarriers, where the time domain signal includes two or more frequency components; perform digital-to-analog conversion on the time domain signal by using a digital-to-analog converter and output a converted time domain signal; process, by using a frequency mixer, the converted signal output from the digital-to-analog converter; and perform power amplification on signals output after the converted signal is processed by using the frequency mixer, to obtain the two or more synchronous carrier frequency signals.

The frequency mixer is configured to mix the converted signal input to the frequency mixer with a local-frequency signal for outputting.

Optionally, in still another specific implementation of this implementation of this application, the sending unit 1402 is specifically configured to send the synchronous carrier frequency information to the at least one second access point by using the synchronous carrier frequency channel or a working channel.

Specific technical features involved in the sending apparatus 140 have been described in detail in the foregoing method implementation. Refer to the foregoing description, and details are not described herein.

Referring to FIG. 15, an implementation of this application further provides a synchronous carrier frequency signal receiving apparatus. The synchronous carrier frequency signal receiving apparatus may be the second access point or the AP in the distributed MIMO in any foregoing implementation, and is configured to implement the steps of the method in the foregoing implementations.

As shown in FIG. 15, the receiving apparatus 150 may include a receiving unit 1501, a determining unit 1502, and a sending unit 1503. In addition, the receiving apparatus 150 may further include more or fewer components, for example, a storage unit. This is not limited in this application.

Further, the receiving unit 1501 is configured to receive synchronous carrier frequency information from a first access point. The determining unit 1502 is configured to determine a synchronous carrier frequency channel based on the synchronous carrier frequency information. The receiving unit 1501 is further configured to receive two or more synchronous carrier frequency signals from the first access point on the synchronous carrier frequency channel, where the two or more synchronous carrier frequency signals are used to determine at least one working radio frequency reference clock of the at least one second access point, and a frequency difference between the two or more synchronous carrier frequency signals is a fixed value.

The synchronous carrier frequency information includes synchronous carrier frequency radio frequency information, and the synchronous carrier frequency radio frequency information includes a center frequency of a carrier frequency or a channel number corresponding to a carrier frequency.

The determining unit 1502 is specifically configured to determine the synchronous carrier frequency channel based on the center frequency of the carrier frequency or the channel number.

Optionally, in a specific implementation of this implementation of this application, the synchronous carrier frequency information includes synchronous carrier frequency signal information, and the synchronous carrier frequency signal information includes a frequency of each synchronous carrier frequency signal, a quantity of synchronous carrier frequency signals and a frequency difference between the synchronous carrier frequency signals, or a subcarrier number of each carrier frequency.

The determining unit 1502 is further configured to: before the two or more synchronous carrier frequency signals are received, determine a frequency difference between synchronous carrier frequency signals based on the frequency of each synchronous carrier frequency signal, the quantity of synchronous carrier frequency signals and the frequency difference between the synchronous carrier frequency signals, or the subcarrier number of each carrier frequency; and set, based on the frequency difference, a radio parameter of a working channel of the second access point, and set, as a working radio frequency reference clock, a signal processed by using a synchronous carrier frequency signal.

Optionally, in another implementation of this implementation of this application, the receiving unit 1501 is specifically configured to receive, by using an application layer, a synchronous carrier frequency information indication from the first access point, where the synchronous carrier frequency information indication includes the synchronous carrier frequency information; or receive a first frame from the first access point, where the first frame carries the synchronous carrier frequency information.

Optionally, in still another specific implementation of this implementation of this application, the determining unit 1502 is further configured to: process the two or more synchronous carrier frequency signals to obtain a first clock signal, where the first clock signal is a frequency difference of the fixed value; and configure an RFPLL based on the first clock signal to obtain a first carrier frequency. The sending unit 1503 is configured to send data at the first carrier frequency.

Further, the sending unit 1503 is specifically configured to jointly send the data with another access point in the distributed MIMO at the first carrier frequency, where a clock signal used when the another access point in the distributed MIMO sends the data is the same as the first clock signal.

Optionally, in still another specific implementation of this implementation of this application, the determining unit 1502 is specifically configured to: successively amplify the two or more synchronous carrier frequency signals by using a low noise amplifier; process the amplified signals by using a frequency mixer, where the frequency mixer is configured to mix the amplified signals input to the frequency mixer with a local-frequency signal for outputting; process amplified signals processed by using the frequency mixer to output at least two channels of same signals; process the at least two channels of same signals by using a multiplier to obtain a first mixed signal; and perform band-pass filtering processing on the first mixed signal to obtain the first clock signal.

Optionally, in still another specific implementation of this implementation of this application, the determining unit 1502 is specifically configured to: successively amplify the two or more synchronous carrier frequency signals by using a low noise amplifier; process the amplified signals by using a frequency mixer, where the frequency mixer is configured to mix the amplified signals input to the frequency mixer with a local-frequency signal for outputting; perform analog-to-digital conversion on amplified signals processed by using the frequency mixer; add or subtract converted signals in a digital domain to obtain a second mixed signal; and perform band-pass filtering processing on the second mixed signal to obtain the first clock signal.

Specific technical features involved in the receiving apparatus 150 have been described in detail in the foregoing method implementation. Refer to the foregoing description, and details are not described herein.

This application further provides an access point AP. As shown in FIG. 16, the access point includes a crystal oscillator or a crystal 1601, a synchronous carrier frequency radio module 1602, a clock selection module 1603, and a working radio module 1604. The synchronous carrier frequency radio module is a newly added functional module, and may be configured to receive and send a synchronous carrier frequency signal by using a working carrier frequency signal.

The crystal oscillator 1601 provides a synchronous radio reference clock for the synchronous carrier frequency radio module, and the clock selection module 1603 is configured to provide a working radio reference clock for the working radio module 1604. The clock selection module 1603 is further configured to select the synchronous radio reference clock or the working radio reference clock as a reference clock of a working channel used by the access point.

It should be noted that the access point described in this implementation of this application may be an AP in distributed MIMO, or may be an independent AP outside an MIMO network, namely, a reference AP.

In another specific implementation, as shown in FIG. 17, an access point AP provided in this application includes a processor 171, a transceiver 172, and a memory 173. The AP may further include more or fewer components, or combine some components, or have a different component arrangement. This is not limited in this application.

As a control center of the AP, the processor 171 is connected to various parts of the entire access point by using various interfaces and lines, and performs various functions and/or data processing of a base station by running or executing a software program and/or a module that are/is stored in the memory 173 and invoking data stored in the memory.

The processor 171 may include an integrated circuit (Integrated Circuit, IC), for example, may include a single packaged IC, or may include a plurality of connected packaged ICs with a same function or different functions. For example, the processor may include only a CPU, or may be a combination of GPU, a digital signal processor (digital signal processor, DSP), and a control chip (for example, a baseband chip) in a transceiver module.

The transceiver 172 may include components such as a receiver, a transmitter, and an antenna, and is configured to receive or send synchronous carrier frequency information and a synchronous carrier frequency signal, establish a communication connection with a STA, and transmit data.

Specifically, the transceiver 172 may include a communications module such as a wireless local area network (wireless local area network, WLAN) module, a Bluetooth module, or a baseband (baseband) module, and a radio frequency (radio frequency, RF) circuit corresponding to the communications module is configured to perform wireless local area network communication, Bluetooth communication, infrared communication, and/or cellular communication systems communication. The transceiver module is configured to control communication of components in the AP, and may support direct memory access (direct memory access).

In different implementations of this application, transceiver modules in the transceiver 172 are generally presented in a form of an integrated circuit chip (integrated circuit chip), and may be selectively combined, without requiring that all the transceiver modules and a corresponding antenna group are included. For example, the transceiver 172 may include only a baseband chip, a radio frequency chip, and a corresponding antenna, to provide a communication function in a cellular communications system. For example, the terminal can be connected to a cellular network (cellular network) or the internet (Internet) by using a wireless communication connection established by the transceiver module, for example, through wireless local area network access or WCDMA access.

The memory 173 is configured to store application program code for performing the technical solutions in this application, and the application program code is controlled and executed by the processor. The processor is configured to execute the application program code stored in the memory, to implement the synchronous carrier frequency signal sending method in the foregoing implementation.

Further, the memory may be a read-only memory (read-only memory, ROM) or another type of static storage device capable of storing static information and an instruction, a random access memory (random access memory, RAM) or another type of dynamic storage device capable of storing information and an instruction. Alternatively, the memory may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a blue-ray optical disc, and the like), a magnetic disk storage medium or another magnetic storage device, or any other medium capable of carrying or storing expected program code in a form of an instruction or a data structure and capable of being accessed by a computer. However, this is not limited thereto. The memory may exist independently, or may be integrated with the processor.

For example, in the apparatus implementation shown in FIG. 14 of this application, functions to be implemented by the obtaining unit 1401 and the sending unit 1403 may be implemented by the transceiver 172 of the AP, or may be implemented by the transceiver 172 controlled by the processor 171. A function to be implemented by the generation unit 1402 may be implemented by the processor 171.

For example, in the apparatus implementation shown in FIG. 15 of this application, functions to be implemented by the receiving unit 1501 and the sending unit 1503 may be implemented by the transceiver 172 of the AP, or may be implemented by the transceiver 172 controlled by the processor 171. A function to be implemented by the determining unit 1502 may be implemented by the processor 171.

In addition, in the AP shown in FIG. 16 of this application, all functions of the synchronous carrier frequency radio module, the clock selection module, and the working radio module may be implemented by the processor 171 and the transceiver 172. For example, a transceiver function of the synchronous carrier frequency radio module is implemented by the transceiver 172, and a processing function is implemented by the processor 171.

The "unit" in the foregoing implementation may be an application-specific integrated circuit (application-specific integrated circuit, ASIC), a processor and a memory that execute one or more software or firmware programs, an integrated logic circuit, and/or another device that can provide the foregoing function.

Further, the memory 173 is configured to store a computer program product. The computer program product includes one or more computer instructions, for example, a synchronous carrier frequency signal sending instruction. When the computer programs are loaded and executed on a computer, the procedures or the functions described in the implementations of this application are all or partially generated.

The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired or wireless manner. The computer-readable storage medium may be a magnetic disk, an optical disc, a read-only memory ROM, a random access memory RAM, or the like.

In an implementation of this application, a system is further provided. As shown in FIG. 1a to FIG. 1d, the system may be an MIMO network. Specifically, the MIMO network includes a switch, at least two access points APs, and at least one terminal. Each AP may be connected to the switch in a wired or wireless manner, and each AP is also connected to the terminal in a wired or wireless manner.

The at least two APs include a reference AP and an AP in distributed MIMO. The reference AP is configured to deliver synchronous carrier frequency information and at least two synchronous carrier frequency signals to each AP in the distributed MIMO, and a frequency difference between the synchronous carrier frequency signals is a fixed value. In this way, each AP in the distributed MIMO determines, based on received synchronous carrier frequency signals of a same channel, a radio frequency reference clock used for radio working, so that reference clocks of different APs are the same, thereby eliminating a problem that a carrier frequency difference between APs is caused by a difference of reference clocks provided by crystal oscillators.

The terminal is also referred to as a site or a mobile station (station, STA), user equipment, a user terminal, a client, or the like, and is a terminal used by a user to access an MIMO network. Specifically, the terminal may include a cellphone, a tablet computer, a palmtop computer, a mobile internet device, or the like. The WLAN terminal is any device that has a WLAN site function, for example, a cellphone (cellphone), a smartphone (smartphone), a computer (computer), a tablet computer (tablet computer), a personal digital assistant (personal digital assistant, PDA), a mobile internet device (mobile Internet device, MID), a wearable device, and an e-book reader (e-book reader).

A person skilled in the art may clearly understand that, the technologies in the implementations of the present disclosure may be implemented by software in addition to a necessary general hardware platform. Based on such an understanding, the technical solutions in the implementations of the present disclosure essentially or the part contributing to the prior art may be implemented in a form of a software product. The computer software product may be stored in a storage medium, for example, a ROM/RAM, a magnetic disk, or an optical disc, and includes several instructions for enabling a computer device (which may be a personal computer, a server, a network device, or the like) to perform the methods described in the implementations or some parts of the implementations of the present disclosure.

For same or similar parts in the implementations in this specification, refer to each other. Particularly, the implementations of the synchronous carrier frequency signal sending apparatus and the synchronous carrier frequency signal receiving apparatus are basically similar to the method implementations, and therefore are described briefly. For related parts, refer to the descriptions in the method implementations.

In addition, in the descriptions of this application, "a plurality of" means two or more than two unless otherwise specified. In addition, to clearly describe the technical solutions in the implementations of this application, terms such as "first" and "second" are used in the implementations of this application to distinguish between same items or similar items that have a basically same function and a basically same purpose. A person skilled in the art may understand that the terms such as "first" and "second" are not intended to limit a quantity or an execution sequence, and that the terms such as "first" and "second" do not indicate a definite difference.

The scope of protection shall be defined by the appended claims.

## Claims

1. A synchronous carrier frequency signal sending method, wherein the method comprises:

   obtaining, by a first access point, synchronous carrier frequency information, wherein the synchronous carrier frequency information is used to set a synchronous carrier frequency channel for at least one second access point;
   sending, by the first access point, the synchronous carrier frequency information to the at least one second access point;
   generating, by the first access point, two or more synchronous carrier frequency signals, wherein a frequency difference between the two or more synchronous carrier frequency signals is a fixed value and wherein the two or more synchronous carrier frequency signals are used to enable the at least one second access point to set the fixed value of the frequency difference between the two or more synchronous carrier frequency signals as at least one working radio frequency reference clock of the at least one second access point; and
   sending, by the first access point, the two or more synchronous carrier frequency signals on the synchronous carrier frequency channel, wherein the generating, by the first access point, two or more synchronous carrier frequency signals comprises:

obtaining, by the first access point, a frequency of a local crystal oscillator (1601);
inputting the frequency of the local crystal oscillator to at least two phase-locked loops, PLLs, and obtaining a frequency of one synchronous carrier frequency signal after the frequency of the local crystal oscillator is processed by using each PLL;
combining frequencies of all synchronous carrier frequency signals into one channel of signals by using a combiner and outputting the channel of signals;
inputting, to a frequency mixer for processing, the channel of signals output from the combiner, wherein the frequency mixer is configured to mix the channel of signals input to the frequency mixer with a local-frequency signal for outputting; and
performing power amplification on signals output after being processed by using the frequency mixer, to obtain the two or more synchronous carrier frequency signals.

2. The method according to claim 1, wherein the synchronous carrier frequency information comprises synchronous carrier frequency radio frequency information and synchronous carrier frequency signal information, wherein

the synchronous carrier frequency radio frequency information comprises a center frequency of a carrier frequency or a channel number corresponding to a carrier frequency; and
the synchronous carrier frequency signal information comprises a frequency of each synchronous carrier frequency signal, a quantity of synchronous carrier frequency signals and a frequency difference between the synchronous carrier frequency signals, or a subcarrier number corresponding to a frequency of each synchronous carrier frequency signal.

3. A synchronous carrier frequency signal sending apparatus (140), wherein the apparatus comprises:

an obtaining unit (1401), configured to obtain synchronous carrier frequency information, wherein the synchronous carrier frequency information is used to set a synchronous carrier frequency channel for at least one second access point;
a sending unit (1403), configured to send the synchronous carrier frequency information to the at least one second access point; and
a generation unit (1402), configured to generate two or more synchronous carrier frequency signals, wherein a frequency difference between the two or more synchronous carrier frequency signals is a fixed value and wherein the two or more synchronous carrier frequency signals are used to enable the at least one second access point to set the fixed value of the frequency difference between the two or more synchronous carrier frequency signals as at least one working radio frequency reference clock of the at least one second access point; wherein the sending unit is further configured to send the two or more synchronous carrier frequency signals on the synchronous carrier frequency channel, wherein
the generation unit (1402) is specifically configured to: obtain a frequency of a local crystal oscillator; input the frequency of the local crystal oscillator (1601) to at least two phase-locked loops, PLLs; obtain a frequency of one synchronous carrier frequency signal after the frequency of the local crystal oscillator is processed by using each PLL; combine frequencies of all synchronous carrier frequency signals into a channel of signals by using a combiner, and output the channel of signals; input, to a frequency mixer for processing, the channel of signals output from the combiner, wherein the frequency mixer is configured to mix the channel of signals input to the frequency mixer with a local-frequency signal for outputting; and perform power amplification on signals output after being processed by using the frequency mixer, to obtain the two or more synchronous carrier frequency signals.

4. The apparatus (140) according to claim 3, wherein the synchronous carrier frequency information comprises synchronous carrier frequency radio frequency information and synchronous carrier frequency signal information, wherein

the synchronous carrier frequency radio frequency information comprises a center frequency of a carrier frequency or a channel number corresponding to a carrier frequency; and
the synchronous carrier frequency signal information comprises a frequency of each synchronous carrier frequency signal, a quantity of synchronous carrier frequency signals and a frequency difference between the synchronous carrier frequency signals, or a subcarrier number corresponding to a frequency of each synchronous carrier frequency signal.

**5.** A synchronous carrier frequency signal receiving apparatus (150), wherein the apparatus comprises:

a receiving unit (1501), configured to receive synchronous carrier frequency information from a first access point; and

a determining unit (1502), configured to determine a synchronous carrier frequency channel based on the synchronous carrier frequency information; wherein

the receiving unit is further configured to receive two or more synchronous carrier frequency signals from the first access point on the synchronous carrier frequency channel, wherein a frequency difference between the two or more synchronous carrier frequency signals is a fixed value and wherein the two or more synchronous carrier frequency signals are used to enable at least one second access point to set the fixed value of the frequency difference between the two or more synchronous carrier frequency signals as at least one working radio frequency reference clock of the at least one second access point, the apparatus further comprising a sending unit (1503), wherein

the determining unit is further configured to: process the two or more synchronous carrier frequency signals to obtain a first clock signal; configure, based on a frequency of the first clock signal, a parameter used for a working radio frequency phase-locked loop, RFPLL, to obtain a first carrier frequency; and

the sending unit is configured to send data at the first carrier frequency, wherein

the determining unit (1502) is specifically configured to: amplify the two or more synchronous carrier frequency signals by using a low noise amplifier; process amplified signals by using a frequency mixer, wherein the frequency mixer is configured to mix amplified signals input to the frequency mixer with a local-frequency signal for outputting; output two channels of same signals based on the signals processed by using the frequency mixer; process, by using a multiplier, the two channels of same signals to obtain a first mixed signal; and perform band-pass filtering processing on the first mixed signal to obtain the first clock signal.

**6.** The apparatus (150) according to claim 5,

wherein the synchronous carrier frequency information comprises synchronous carrier frequency radio frequency information, and the synchronous carrier frequency radio frequency information comprises a center frequency of a carrier frequency or a channel number corresponding to a carrier frequency; and

the determining unit (1502) is specifically configured to determine the synchronous carrier frequency channel based on the center frequency of the carrier frequency or the channel number.

**7.** The apparatus (150) according to claim 5 or 6, wherein

the synchronous carrier frequency information comprises synchronous carrier frequency signal information, and the synchronous carrier frequency signal information comprises a frequency of each synchronous carrier frequency signal, a quantity of synchronous carrier frequency signals and a frequency difference between the synchronous carrier frequency signals, or a subcarrier number corresponding to a frequency of each synchronous carrier frequency signal; and

the determining unit (1502) is further configured to: before the two or more synchronous carrier frequency signals are received, determine a frequency difference between synchronous carrier frequency signals based on the frequency of each synchronous carrier frequency signal, the quantity of synchronous carrier frequency signals and the frequency difference between the synchronous carrier frequency signals, or the subcarrier number; set, based on the frequency difference, a radio parameter of a working channel of the at least one second access point; and set, as a working radio frequency reference clock, a signal processed by using a synchronous carrier frequency signal.

**Patentansprüche**

**1.** Verfahren zum synchronen Senden von Trägerfrequenzsignalen, wobei das Verfahren Folgendes umfasst:

Erlangen von synchronen Trägerfrequenzinformationen durch einen ersten Zugangspunkt, wobei die synchronen Trägerfrequenzinformationen verwendet werden, um einen synchronen Trägerfrequenzkanal für mindestens einen zweiten Zugangspunkt einzustellen;
Senden der synchronen Trägerfrequenzinformationen durch den ersten Zugangspunkt an den mindestens einen zweiten Zugangspunkt;

Generieren von zwei oder mehr synchronen Trägerfrequenzsignalen durch den ersten Zugangspunkt, wobei eine Frequenzdifferenz zwischen den zwei oder mehr synchronen Trägerfrequenzsignalen ein fester Wert ist und wobei die zwei oder mehr synchronen Trägerfrequenzsignale verwendet werden, um den mindestens einen zweiten Zugangspunkt in die Lage zu versetzen, den festen Wert der Frequenzdifferenz zwischen den zwei oder mehr synchronen Trägerfrequenzsignalen als mindestens einen Referenztakt der Arbeitsfunkfrequenzen des mindestens einen zweiten Zugangspunkts einzustellen; und

Senden der zwei oder mehr synchronen Trägerfrequenzsignale auf dem synchronen Trägerfrequenzkanal durch den ersten Zugangspunkt, wobei das Generieren von zwei oder mehr synchronen Trägerfrequenzsignalen durch den ersten Zugangspunkt Folgendes umfasst:

Erlangen einer Frequenz eines lokalen Kristalloszillators (1601) durch den ersten Zugangspunkt;

Eingeben der Frequenz des lokalen Kristalloszillators in mindestens zwei phasenverriegelte Schleifen, PLLs, und Erlangen einer Frequenz eines synchronen Trägerfrequenzsignals, nachdem die Frequenz des lokalen Kristalloszillators unter Verwendung jeder PLL verarbeitet wurde;

Kombinieren von Frequenzen aller synchronen Trägerfrequenzsignale zu einem Signalkanal unter Verwendung eines Kombinierers und Ausgeben des Signalkanals;

Eingeben des Signalkanals, der von dem Kombinierer ausgegeben wird, in einen Frequenzmischer zum Verarbeiten, wobei der Frequenzmischer dazu konfiguriert ist, den Signalkanal, der in den Frequenzmischer eingegeben wird, mit einem lokalen Frequenzsignal zum Ausgeben zu mischen; und

Durchführen einer Leistungsverstärkung an den Signalen, die nach dem Verarbeiten unter der Verwendung des Frequenzmischer ausgegeben werden, um die zwei oder mehr synchronen Trägerfrequenzsignale zu erlangen.

2. Verfahren nach Anspruch 1, wobei die synchronen Trägerfrequenzinformationen Hochfrequenzinformationen der synchronen Trägerfrequenzen und Informationen der synchronen Trägerfrequenzsignale umfassen, wobei

die Funkfrequenzinformationen der synchronen Trägerfrequenzen eine Mittenfrequenz einer Trägerfrequenz oder eine Kanalnummer entsprechend einer Trägerfrequenz umfassen; und

die Informationen der synchronen Trägerfrequenzsignale eine Frequenz jedes synchronen Trägerfrequenzsignals, eine Menge von synchronen Trägerfrequenzsignalen und eine Frequenzdifferenz zwischen den synchronen Trägerfrequenzsignalen oder eine Unterträgernummer entsprechend einer Frequenz jedes synchronen Trägerfrequenzsignals umfassen.

3. Vorrichtung (140) zum synchronen Senden von Trägerfrequenzsignalen, wobei die Vorrichtung Folgendes umfasst:

eine Erlangungseinheit (1401), die dazu konfiguriert ist, synchrone Trägerfrequenzinformationen zu erlangen, wobei die synchronen Trägerfrequenzinformationen verwendet werden, um einen synchronen Trägerfrequenzkanal für mindestens einen zweiten Zugangspunkt einzustellen;

eine Sendeeinheit (1403), die dazu konfiguriert ist, die synchronen Trägerfrequenzinformationen an den mindestens einen zweiten Zugangspunkt zu senden; und

eine Generierungseinheit (1402), die dazu konfiguriert ist, zwei oder mehr synchrone Trägerfrequenzsignale zu generieren, wobei eine Frequenzdifferenz zwischen den zwei oder mehr synchronen Trägerfrequenzsignalen ein fester Wert ist und wobei die zwei oder mehr synchronen Trägerfrequenzsignale verwendet werden, um den mindestens einen zweiten Zugangspunkt in die Lage zu versetzen, den festen Wert der Frequenzdifferenz zwischen den zwei oder mehr synchronen Trägerfrequenzsignalen als mindestens einen Referenztakt der Arbeitsfunkfrequenzen des mindestens einen zweiten Zugangspunkts einzustellen; wobei

die Sendeeinheit ferner dazu konfiguriert ist, die zwei oder mehr synchronen Trägerfrequenzsignale auf dem synchronen Trägerfrequenzkanal zu senden, wobei

die Generierungseinheit (1402) speziell dazu konfiguriert ist: eine Frequenz eines lokalen Kristalloszillators zu erlangen, die Frequenz des lokalen Kristalloszillators (1601) in mindestens zwei phasenverriegelte Schleifen, PLLs, einzugeben; eine Frequenz eines synchronen Trägerfrequenzsignals zu erlangen, nachdem die Frequenz des lokalen Kristalloszillators unter Verwendung jeder PLL verarbeitet wurde; Frequenzen aller synchronen Trägerfrequenzsignale unter Verwendung eines Kombinierers in einen Signalkanal zu kombinieren und den Signalkanal auszugeben; den Signalkanal, der von dem Kombinierer ausgegeben wird, in einem Frequenzmischer zum Verarbeiten einzugeben, wobei der Frequenzmischer dazu konfiguriert ist, den Signalkanal, der in den Frequenzmischer eingegeben ist, mit einem lokalen Frequenzsignal zum Ausgeben zu mischen; und eine Leistungsverstärkung an Signalen durchzuführen, die ausgegeben werden, nachdem sie unter Verwendung des Frequenzmischers verarbeitet wurden, um die zwei oder mehr synchronen Trägerfrequenzsignale zu erlangen.

4. Vorrichtung (140) nach Anspruch 3, wobei die synchronen Trägerfrequenzinformationen Hochfrequenzinformationen der synchronen Trägerfrequenzen und Informationen der synchronen Trägerfrequenzsignale umfassen, wobei

die Funkfrequenzinformationen der synchronen Trägerfrequenzen eine Mittenfrequenz einer Trägerfrequenz oder eine Kanalnummer entsprechend einer Trägerfrequenz umfassen; und
die Informationen der synchronen Trägerfrequenzsignale eine Frequenz jedes synchronen Trägerfrequenzsignals, eine Menge von synchronen Trägerfrequenzsignalen und eine Frequenzdifferenz zwischen den synchronen Trägerfrequenzsignalen oder eine Unterträgernummer entsprechend einer Frequenz jedes synchronen Trägerfrequenzsignals umfassen.

5. Vorrichtung (150) zum synchronen Empfangen von Trägerfrequenzsignalen, wobei die Vorrichtung Folgendes umfasst:

eine Empfangseinheit (1501), die dazu konfiguriert ist, synchrone Trägerfrequenzinformationen von einem ersten Zugangspunkt zu empfangen; und
eine Bestimmungseinheit (1502), die dazu konfiguriert ist, einen synchronen Trägerfrequenzkanal basierend auf den synchronen Trägerfrequenzinformationen zu bestimmen; wobei
die Empfangseinheit ferner dazu konfiguriert ist, zwei oder mehr synchrone Trägerfrequenzsignale von dem ersten Zugangspunkt auf dem synchronen Trägerfrequenzkanal zu empfangen, wobei eine Frequenzdifferenz zwischen den zwei oder mehr synchronen Trägerfrequenzsignalen ein fester Wert ist und wobei die zwei oder mehr synchronen Trägerfrequenzsignale verwendet werden, um mindestens einen zweiten Zugangspunkt in die Lage zu versetzen, den festen Wert der Frequenzdifferenz zwischen den zwei oder mehr synchronen Trägerfrequenzsignalen als mindestens einen Referenztakt der Arbeitsfunkfrequenzen des mindestens einen zweiten Zugangspunkts einzustellen, wobei die Vorrichtung ferner eine Sendeeinheit (1503) umfasst, wobei die Bestimmungseinheit ferner dazu konfiguriert ist: die zwei oder mehr synchronen Trägerfrequenzsignale zu verarbeiten, um ein erstes Taktsignal zu erlangen; basierend auf einer Frequenz des ersten Taktsignals einen Parameter zu konfigurieren, der für eine phasenverriegelte Arbeits-Hochfrequenzschleife, RFPLL, verwendet wird, um eine erste Trägerfrequenz zu erlangen; und
die Sendeeinheit dazu konfiguriert ist, Daten in der ersten Trägerfrequenz zu senden, wobei
die Bestimmungseinheit (1502) speziell dazu konfiguriert ist:

die zwei oder mehr synchronen Trägerfrequenzsignale unter Verwendung eines rauscharmen Verstärkers zu verstärken;
verstärkte Signale unter Verwendung eines Frequenzmischers zu verarbeiten, wobei der Frequenzmischer dazu konfiguriert ist, verstärkte Signale, die in den Frequenzmischer eingegeben werden, mit einem Lokalfrequenzsignal zum Ausgeben zu mischen;
zwei Kanäle gleicher Signale basierend auf den Signalen, die unter Verwendung des Frequenzmischers verarbeitet werden, auszugeben; die zwei Kanäle gleicher Signale unter Verwendung eines Multiplizierers zu verarbeiten, um ein erstes gemischtes Signal zu erlangen; und eine Bandpassfilterverarbeitung auf dem ersten gemischten Signal durchzuführen, um das erste Taktsignal zu erlangen.

6. Vorrichtung (150) nach Anspruch 5,

wobei die synchronen Trägerfrequenzinformationen Funkfrequenzinformationen der synchronen Trägerfrequenzen umfassen und die Funkfrequenzinformationen der synchronen Trägerfrequenzen eine Mittenfrequenz einer Trägerfrequenz oder eine Kanalnummer entsprechend einer Trägerfrequenz umfassen; und
die Bestimmungseinheit (1502) speziell dazu konfiguriert ist, den synchronen Trägerfrequenzkanal basierend auf der Mittenfrequenz der Trägerfrequenz oder der Kanalnummer zu bestimmen.

7. Vorrichtung (150) nach Anspruch 5 oder 6, wobei

die synchronen Trägerfrequenzinformationen Informationen der synchronen Trägerfrequenzsignale umfassen und die Informationen der synchronen Trägerfrequenzsignale eine Frequenz jedes synchronen Trägerfrequenzsignals, eine Menge von synchronen Trägerfrequenzsignalen und eine Frequenzdifferenz zwischen den synchronen Trägerfrequenzsignalen oder eine Unterträgernummer entsprechend einer Frequenz jedes synchronen Trägerfrequenzsignals umfassen; und

die Bestimmungseinheit (1502) ferner dazu konfiguriert ist: eine Frequenzdifferenz zwischen synchronen Trägerfrequenzsignalen basierend auf der Frequenz jedes synchronen Trägerfrequenzsignals, der Menge von synchronen Trägerfrequenzsignalen und der Frequenzdifferenz zwischen den synchronen Trägerfrequenzsignalen oder der Unterträgernummer zu bestimmen, bevor die zwei oder mehr synchronen Trägerfrequenzsignale empfangen werden; basierend auf der Frequenzdifferenz einen Funkparameter eines Arbeitskanals des mindestens einen zweiten Zugangspunkts einzustellen; und ein Signal, das unter Verwendung eines synchronen Trägerfrequenzsignals verarbeitet wird, als einen Referenztakt der Arbeitsfunkfrequenzen einzustellen.

**Revendications**

1.  Procédé d'envoi de signal de fréquence porteuse synchrone, dans lequel le procédé comprend :

    l'obtention, par un premier point d'accès, d'informations de fréquence porteuse synchrone, dans lequel les informations de fréquence porteuse synchrone sont utilisées pour définir un canal de fréquence porteuse synchrone pour au moins un second point d'accès ;
    l'envoi, par le premier point d'accès, des informations de fréquence porteuse synchrone à l'au moins un second point d'accès ;
    la génération, par le premier point d'accès, de deux signaux de fréquence porteuse synchrone ou plus, dans lequel une différence de fréquence entre les deux signaux de fréquence porteuse synchrone ou plus est une valeur fixe et dans lequel les deux signaux de fréquence porteuse synchrone ou plus sont utilisés pour permettre à l'au moins un second point d'accès de définir la valeur fixe de la différence de fréquence entre les deux signaux de fréquence porteuse synchrone ou plus comme au moins une horloge de référence de fréquence radio fonctionnelle de l'au moins un second point d'accès ; et
    l'envoi, par le premier point d'accès, des deux signaux de fréquence porteuse synchrone ou plus sur le canal de fréquence porteuse synchrone, dans lequel la génération, par le premier point d'accès, de deux signaux de fréquence porteuse synchrone ou plus comprend :

      l'obtention, par le premier point d'accès, d'une fréquence d'un oscillateur à cristal local (1601) ;
      la saisie de la fréquence de l'oscillateur à cristal local dans au moins deux boucles à verrouillage de phase, PLL, et l'obtention d'une fréquence d'un signal de fréquence porteuse synchrone après que la fréquence de l'oscillateur à cristal local a été traitée à l'aide de chaque PLL ;
      la combinaison des fréquences de tous les signaux de fréquence porteuse synchrone en un seul canal de signaux à l'aide d'un combinateur et l'émission du canal de signaux ;
      la saisie, dans un mélangeur de fréquence pour traitement, du canal de signaux émis par le combinateur, dans lequel le mélangeur de fréquence est configuré pour mélanger le canal de signaux entré dans le mélangeur de fréquence avec un signal de fréquence locale pour l'émission ; et
      la réalisation d'une amplification de puissance sur les signaux émis après avoir été traités à l'aide du mélangeur de fréquence, pour obtenir les deux signaux de fréquence porteuse synchrone ou plus.

2.  Procédé selon la revendication 1, dans lequel les informations de fréquence porteuse synchrone comprennent des informations de fréquence radio de fréquence porteuse synchrone et des informations de signal de fréquence porteuse synchrone, dans lequel

    les informations de fréquence radio de fréquence porteuse synchrone comprennent une fréquence centrale d'une fréquence porteuse ou un numéro de canal correspondant à une fréquence porteuse ; et
    les informations de signal de fréquence porteuse synchrone comprennent une fréquence de chaque signal de fréquence porteuse synchrone, une quantité de signaux de fréquence porteuse synchrone et une différence de fréquence entre les signaux de fréquence porteuse synchrone, ou un numéro de sous-porteuse correspondant à une fréquence de chaque signal de fréquence porteuse synchrone.

3.  Appareil d'envoi de signal de fréquence porteuse synchrone (140), dans lequel l'appareil comprend :

    une unité d'obtention (1401), configurée pour obtenir des informations de fréquence porteuse synchrone, dans lequel les informations de fréquence porteuse synchrone sont utilisées pour définir un canal de fréquence porteuse synchrone pour au moins un second point d'accès ;
    une unité d'envoi (1403), configurée pour envoyer les informations de fréquence porteuse synchrone à l'au moins un second point d'accès ; et

une unité de génération (1402), configurée pour générer deux signaux de fréquence porteuse synchrone ou plus, dans lequel une différence de fréquence entre les deux signaux de fréquence porteuse synchrone ou plus est une valeur fixe et dans lequel les deux signaux de fréquence porteuse synchrone ou plus sont utilisés pour permettre à l'au moins un second point d'accès de définir la valeur fixe de la différence de fréquence entre les deux signaux de fréquence porteuse synchrone ou plus comme au moins une horloge de référence de fréquence radio fonctionnelle de l'au moins un second point d'accès ; dans lequel

l'unité d'envoi est également configurée pour envoyer les deux signaux de fréquence porteuse synchrone ou plus sur le canal de fréquence porteuse synchrone, dans lequel

l'unité de génération (1402) est spécifiquement configurée pour : obtenir une fréquence d'un oscillateur à cristal local, saisir la fréquence de l'oscillateur à cristal local (1601) dans au moins deux boucles à verrouillage de phase, PLL ; obtenir une fréquence d'un signal de fréquence porteuse synchrone après que la fréquence de l'oscillateur à cristal local a été traitée à l'aide de chaque PLL ; combiner les fréquences de tous les signaux de fréquence porteuse synchrone dans un canal de signaux à l'aide d'un combinateur, et émettre le canal de signaux ; saisir, dans un mélangeur de fréquence pour traitement, le canal de signaux émis du combinateur, dans lequel le mélangeur de fréquence est configuré pour mélanger le canal de signaux saisi dans le mélangeur de fréquence avec un signal de fréquence locale pour l'émission ; et réaliser une amplification de puissance sur les signaux émis après avoir été traités à l'aide du mélangeur de fréquence, pour obtenir les deux signaux de fréquence porteuse synchrone ou plus.

4. Appareil (140) selon la revendication 3, dans lequel les informations de fréquence porteuse synchrone comprennent des informations de fréquence radio de fréquence porteuse synchrone et des informations de signal de fréquence porteuse synchrone, dans lequel

les informations de fréquence radio de fréquence porteuse synchrone comprennent une fréquence centrale d'une fréquence porteuse ou un numéro de canal correspondant à une fréquence porteuse ; et les informations de signal de fréquence porteuse synchrone comprennent une fréquence de chaque signal de fréquence porteuse synchrone, une quantité de signaux de fréquence porteuse synchrone et une différence de fréquence entre les signaux de fréquence porteuse synchrone, ou un numéro de sous-porteuse correspondant à une fréquence de chaque signal de fréquence porteuse synchrone.

5. Appareil de réception de signal de fréquence porteuse synchrone (150), dans lequel l'appareil comprend :

une unité de réception (1501), configurée pour recevoir des informations de fréquence porteuse synchrone à partir d'un premier point d'accès ; et une unité de détermination (1502), configurée pour déterminer un canal de fréquence porteuse synchrone sur la base des informations de fréquence porteuse synchrone ; dans lequel l'unité de réception est également configurée pour recevoir deux signaux de fréquence porteuse synchrone ou plus à partir du premier point d'accès sur le canal de fréquence porteuse synchrone, dans lequel une différence de fréquence entre les deux signaux de fréquence porteuse synchrone ou plus est une valeur fixe et dans lequel les deux signaux de fréquence porteuse synchrone ou plus sont utilisés pour permettre à au moins un second point d'accès de définir la valeur fixe de la différence de fréquence entre les deux signaux de fréquence porteuse synchrone ou plus comme au moins une horloge de référence de fréquence radio fonctionnelle de l'au moins un second point d'accès, l'appareil comprenant également une unité d'envoi (1503), dans lequel l'unité de détermination est également configurée pour : traiter les deux signaux de fréquence porteuse synchrones ou plus pour obtenir un premier signal d'horloge ; configurer, sur la base d'une fréquence du premier signal d'horloge, un paramètre utilisé pour une boucle à verrouillage de phase fréquence radio, RFPLL, fonctionnelle pour obtenir une première fréquence porteuse ; et l'unité d'envoi est configurée pour envoyer des données à la première fréquence porteuse, dans lequel l'unité de détermination (1502) est spécifiquement configurée pour : amplifier les deux signaux de fréquence porteuse synchrone ou plus à l'aide d'un amplificateur à faible bruit ; traiter les signaux amplifiés à l'aide un mélangeur de fréquence, dans lequel le mélangeur de fréquence est configuré pour mélanger les signaux amplifiés saisis dans le mélangeur de fréquence avec un signal de fréquence locale pour l'émission ; émettre deux canaux de mêmes signaux sur la base des signaux traités à l'aide du mélangeur de fréquence ; traiter, à l'aide d'un multiplicateur, les deux canaux de mêmes signaux pour obtenir un premier signal mixte ; et réaliser un traitement de filtrage passe-bande sur le premier signal mélangé pour obtenir le premier signal d'horloge.

# EP 3 661 145 B1

6. Appareil (150) selon la revendication 5,

dans lequel les informations de fréquence porteuse synchrone comprennent des informations de fréquence radio de fréquence porteuse synchrone, et les informations de fréquence radio de fréquence porteuse synchrone comprennent une fréquence centrale d'une fréquence porteuse ou un numéro de canal correspondant à une fréquence porteuse ; et

l'unité de détermination (1502) est spécifiquement configurée pour déterminer le canal de fréquence porteuse synchrone sur la base de la fréquence centrale de la fréquence porteuse ou du numéro de canal.

7. Appareil (150) selon la revendication 5 ou 6, dans lequel

les informations de fréquence porteuse synchrone comprennent des informations de signal de fréquence porteuse synchrone, et les informations de signal de fréquence porteuse synchrone comprennent une fréquence de chaque signal de fréquence porteuse synchrone, une quantité de signaux de fréquence porteuse synchrone et une différence de fréquence entre les signaux de fréquence porteuse synchrone, ou un numéro de sous-porteuse correspondant à une fréquence de chaque signal de fréquence porteuse synchrone ; et

l'unité de détermination (1502) est également configurée pour : avant que les deux signaux de fréquence porteuse synchrone ou plus ne soient reçus, déterminer une différence de fréquence entre les signaux de fréquence porteuse synchrone sur la base de la fréquence de chaque signal de fréquence porteuse synchrone, de la quantité de signaux de fréquence porteuse synchrone et de la différence de fréquence entre les signaux de fréquence porteuse synchrone, ou du nombre de sous-porteuses ; définir, sur la base de la différence de fréquence, un paramètre radio d'un canal fonctionnel de l'au moins un second point d'accès ; et définir, en tant qu'horloge de référence de fréquence radio fonctionnelle, un signal traité à l'aide d'un signal de fréquence porteuse synchrone.

STA 1

STA 2

STA ...

STA m

Wireless signal

Wireless signal

Wireless signal

Wireless signal

AP 1

AP 2

(ref)AP ...

AP n

Ethernet
optical fiber

Switch

FIG. 1a

FIG. 1b

EP 3 661 145 B1

Switch — Ethernet optical fiber

AP 1 — Wireless signal — STA 1

AP 2 — Wireless signal — STA 2

(ref)AP

AP 3 — Wireless signal — STA ...

...

AP n — Wireless signal — STA m

FIG. 1c

EP 3 661 145 B1

```
                                          ┌──────────────┐                              ┌──────────────┐
                            Wireless signal │    AP 1      │── Wireless signal ──│    STA 1     │
                          ↗                └──────────────┘                              └──────────────┘

                        Wireless signal     ┌──────────────┐                              ┌──────────────┐
  ┌────────────────┐  ↗                     │    AP 2      │── Wireless signal ──│    STA 2     │
  │ networkBackhaul │                       └──────────────┘                              └──────────────┘
  └────────────────┘                       ┌──────────────┐
                          Wireless signal   │   (ref)AP    │
                        ↘                   └──────────────┘
                                            ┌──────────────┐                              ┌──────────────┐
                          Wireless signal   │    AP 3      │── Wireless signal ──│   STA ...    │
                                            └──────────────┘                              └──────────────┘
                                                 ...
                                            ┌──────────────┐                              ┌──────────────┐
                                            │    AP n      │── Wireless signal ──│   STA m     │
                                            └──────────────┘                              └──────────────┘
```

FIG. 1d

If there is no carrier frequency difference between access points in distributed MIMO

Ethernet

AP 1　　　AP 2

$x_1$　　　$x_2$

$h_{11}$　$h_{21}$　　$h_{12}$　$h_{22}$

$y_1 = p_1$　　　$y_2 = p_2$

Client　　　Client

Throughput (Mbps)

250
200
150
100
50
0

802.11
JMB

A throughput of the distributed MIMO increases linearly with a quantity of APs

2　3　4　5　6　7　8　9　10

Number of receivers

$$\begin{bmatrix} x_1 \\ x_2 \end{bmatrix} = H^{-1} \begin{bmatrix} p_1 \\ p_2 \end{bmatrix}$$　　Precoding

Transmit end: p is original data that needs to be transmitted, and is multiplied by an inverse of a transmission channel through the precoding to obtain transmitted data x

After the transmitted data is processed on the transmission channel during actual transmission

$$\begin{bmatrix} y_1 \\ y_2 \end{bmatrix} = H \begin{bmatrix} x_1 \\ x_2 \end{bmatrix} = HH^{-1} \begin{bmatrix} p_1 \\ p_2 \end{bmatrix} = \begin{bmatrix} p_1 \\ p_2 \end{bmatrix}$$

Receive end: after the transmitted data x is processed on the transmission channel (a diagonal matrix is formed), the receive end separately decodes the transmitted data x to obtain the original data p

FIG. 2a

Actual situation: there is a frequency difference (2 to 20 PPM $10^{-6}$) when APs use independent crystal oscillators

Ethernet

AP 1  AP 2

$x_1$  $x_2$

$e^{j\Delta_1}$  $e^{j\Delta_2}$

$h_{21}$  $h_{12}$

$h_{11}$

Frequencies are inconsistent when the APs use different crystal oscillators

$h_{22}$

$y_1 = p_1$  $y_2 = p_2$

Client  Client

Precoding

$$\begin{bmatrix} x_1 \\ x_2 \end{bmatrix} = \begin{bmatrix} e^{j\Delta_1} & 0 \\ 0 & e^{j\Delta_2} \end{bmatrix} H^{-1} \begin{bmatrix} p_1 \\ p_2 \end{bmatrix}$$

Transmit end: p is original data that needs to be transmitted, and is multiplied by an inverse of a transmission channel through the precoding to obtain transmitted data x. The box part is introduced due to the carrier frequency difference between the APs

After the transmitted data x is processed on the channel during actual transmission

$$\begin{bmatrix} y_1 \\ y_2 \end{bmatrix} = H \begin{bmatrix} x_1 \\ x_2 \end{bmatrix} = H \begin{bmatrix} e^{j\Delta_1} & 0 \\ 0 & e^{j\Delta_2} \end{bmatrix} H^{-1} \begin{bmatrix} p_1 \\ p_2 \end{bmatrix}$$

$$\neq \begin{bmatrix} p_1 \\ p_2 \end{bmatrix}$$

Receive end: the transmitted data x is processed on the transmission channel. When there is a large frequency difference between the APs, the receive end cannot separately decode the transmitted data x to obtain the original data p

FIG. 2b

First access
point
Reference
AP

Second
access point
AP 1

Second
access point
AP 2

301: Obtain
synchronous carrier
frequency information

303: Receive the
synchronous carrier
frequency
information, and
determine a
synchronous carrier
frequency channel
based on the
synchronous carrier
frequency
information

302: Send the synchronous carrier
frequency information
(synchronous carrier frequency
radio frequency information and
synchronous carrier frequency
signal information)

302: Send the synchronous carrier frequency information
(synchronous carrier frequency radio frequency information
and synchronous carrier frequency signal information)

303: Receive the
synchronous carrier
frequency
information, and
determine a
synchronous carrier
frequency channel
based on the
synchronous carrier
frequency
information

TO
FIG. 3B

TO
FIG. 3B

TO
FIG. 3B

FIG. 3A

CONT.
FROM
FIG. 3A

CONT.
FROM
FIG. 3A

CONT.
FROM
FIG. 3A

304: Generate two or more synchronous carrier frequency signals, where a frequency difference is a fixed value

305: Send the two or more synchronous carrier frequency signals on the synchronous carrier frequency channel

306: Receive the two or more synchronous carrier frequency signals and process the two or more synchronous carrier frequency signals to output a working channel frequency reference clock

306: Receive the two or more synchronous carrier frequency signals and process the two or more synchronous carrier frequency signals to output a working channel frequency reference clock

307: Jointly send data

FIG. 3B

TO
FIG. 4a-2

RF2

Reference clock 2

OSC2

IDFT

Time domain signal including two subcarrier frequencies

DFT

Subcarrier 0

Subcarrier 1

Subcarrier ...

Subcarrier A

Subcarrier m

Subcarrier n

Subcarrier B

Subcarrier ...

Subcarrier 62

Subcarrier 63

AP in distributed MIMO

$$Srx = cos\left(w_1{}'t + Q_1{}'\right) + cos\left(w_2{}'t + Q_2{}'\right)$$

FIG. 4a-1

| Subcarrier 0 | — — — — |
| Subcarrier 1 | - - - - - |
| Subcarrier ... | ·········· |
| Subcarrier A | (waveform) |
| Subcarrier m | —·—·—·— |
| Subcarrier n | — — — |
| Subcarrier B | (waveform) |
| Subcarrier ... | — — — — |
| Subcarrier 62 | - - - - - |
| Subcarrier 63 | ·········· |

iDFT → Time domain signal including two subcarrier frequencies → RF1 → Spatial channel

CONT. FROM FIG. 4a-1

Reference clock 1

OSC1

Reference AP

$$Stx = cos\left(w_1 t + Q_1\right) + cos\left(w_2 t + Q_2\right)$$

FIG. 4a-2

FIG. 4b

| First access point Reference AP | Second access point AP 1 | Second access point AP 2 |
|---|---|---|

501: Synchronous carrier frequency information exchange (application layer)
Synchronous carrier frequency radio frequency information: 2.412 GHz
Synchronous carrier frequency signal information: a first signal frequency of 1 MHz and and a second signal frequency of 11 MHz

502: Set synchronous carrier frequency radio receiving parameters (2.412 GHz and 20 MHz), set a radio parameter of a working channel, where a reference clock frequency is 10 MHz, and use a signal processed by using the synchronous carrier frequency information as a working radio reference clock

503: Generate and send two or more synchronous carrier frequency signals in an analog domain manner

504: Receive the two or more synchronous carrier frequency signals in the analog domain manner, and after the two or more synchronous carrier frequency signals are processed, use processed signals as working radio frequency reference clocks

505: Jointly send data

FIG. 5

FIG. 6a

Receive a signal

f0 + f1   f0 + f2          f + f1     f + f2

Low noise amplifier LNA → Frequency mixer → f0' = f0' − f0 → Band-pass filter → Power splitter

Local-frequency signal f0'

f + f1     f + f2          f + f1     f + f2

First carrier frequency ← RFPLL ← Band-pass filter ← Multiplier

f2 − f1

f2 − f1   2f + 2f1   2f + f1 + f2   2f + 2f2

FIG. 6b

First access
point
Reference AP

Second access
point
AP 1

Second access
point
AP 2

701: Synchronous carrier frequency
information exchange (application
layer)
Synchronous carrier frequency radio
frequency information: 2.412 GHz
Synchronous carrier frequency signal
information: a first signal frequency
of 1 MHz and a second signal
frequency of 11 MHz

702: Set synchronous carrier
frequency radio receiving parameters
(2.412 GHz and 20 MHz), set a radio
parameter of a working channel,
where a reference clock frequency is
10 MHz, and use a signal processed
by using the synchronous carrier
frequency information as a working
radio reference clock

703: Generate and send two synchronous carrier
frequency signals in an analog domain manner

704: Receive the two
synchronous carrier
frequency signals in the
digital domain manner,
and processes the two
synchronous carrier
frequency signals to
output working radio
frequency reference
clocks

705: Jointly send data

FIG. 7

FIG. 8

| First access point Reference AP | Second access point AP 1 | Second access point AP 2 |

901: Synchronous carrier frequency information exchange (802.11 frame) Synchronous carrier frequency radio frequency information: 5.745 GHz Synchronous carrier frequency signal information: first subcarrier -21 and second subcarrier 7

902: Set synchronous carrier frequency radio receiving parameters (5.745 GHz and 20 MHz), set a radio parameter of a working channel, where a reference clock frequency is 8.75MHz, and use a signal processed by using the synchronous carrier frequency information as a working radio reference clock

903: Generate and send two synchronous carrier frequency signals in a digital domain manner

904: Receive the two synchronous carrier frequency signals in the analog domain manner, and process the two synchronous carrier frequency signals to output working radio frequency reference clocks

905: Jointly send data

FIG. 9

| Type value<br>B3 B2 | Type description | Subtype value<br>B7 B6 B5 B4 | Subtype description |
|---|---|---|---|
| 00 | Management (frame) | 0000 | Association request |
| 00 | Management (frame) | 0001 | Association response |
| 00 | Management (frame) | 1101 | Action (frame) |
| 00 | Management (frame) | 1110 | Action No Ack (frame) |
| 00 | Management (frame) | 1111 | Reserved |
| 01 | Control (frame) | 0000–0011 | Reserved |

FIG. 10a

| Code | Meaning | See subclause | Robust | Group addressed privacy |
|---|---|---|---|---|
| 14 | Multihop Multihop | 8.5.18 | Yes | Yes |
| 15 | Self-protected | 8.5.16 | No | No |
| 16 | Reserved | - | - | - |
| 17 | Reserved (used by WFA (the Wi-Fi Alliance)) | - | - | - |
| 18–125 | Reserved | - | - | - |
| 126 | Vendor-specific protected | 8.5.6 | Yes | No |
| 127 | Vendor-specific | 8.5.6 | No | No |
| 128–255 | Error | - | - | - |

FIG. 10b

21

| | | Carrier center frequency | First signal frequency | Second signal frequency |
|---|---|---|---|---|
| Category | Action detailsAction details | 5,000,000,000 | 1000 | 10,001,000 |

1        Variable

FIG. 10c

FIG. 11

| First access point Reference AP | Second access point AP 1 | Second access point AP 2 |

1201: Synchronous carrier frequency information exchange (802.11 frame)
Synchronous carrier frequency radio frequency information: 5.745 GHz
Synchronous carrier frequency signal information: first subcarrier - 21 and second subcarrier 7

1202: Set synchronous carrier frequency radio receiving parameters (5.745 GHz and 20 MHz), set a radio parameter of a working channel, where a reference clock frequency is 8.75 MHz, and use a signal processed by using the synchronous carrier frequency information as a working radio reference clock

1203: Generate and send synchronous carrier frequency signals in a digital domain manner

1204: Receive the synchronous carrier frequency signals in the digital domain manner, and process the synchronous carrier frequency signals to output working radio frequency reference clocks

1205: Jointly send data

FIG. 12

FIG. 13

FIG. 14

150

Receiving apparatus

1501

Receiving unit

1502

Determining unit

1503

Sending unit

FIG. 15

Access point AP

1601

Crystal oscillator (crystal)

1603

Clock selection module

Synchronous radio reference clock

Working radio reference clock

1602

Synchronous carrier frequency radio module

1604

Working radio module

FIG. 16

FIG. 17

**REFERENCES CITED IN THE DESCRIPTION**

**Patent documents cited in the description**

- US 2014369243 A
- US 201421779 B

- US 2013315211 A

**Non-patent literature cited in the description**

- **HORIA VLAD BALAN et al.** *Air Sync IEEE/ACM Transactions on Networking*, 01 December 2013, vol. 21 (6), 1681-1695